(19)

Europäisches
Patentamt

European
Patent Office

Office européen
des brevets

(11) **EP 4 660 671 A1**

(12) **EUROPEAN PATENT APPLICATION**
published in accordance with Art. 153(4) EPC

(43) Date of publication:
**10.12.2025 Bulletin 2025/50**

(21) Application number: **24750189.3**

(22) Date of filing: **29.01.2024**

(51) International Patent Classification (IPC):
**G02B 3/06** (2006.01)     **G01C 3/06** (2006.01)
**G01S 7/481** (2006.01)     **G02B 3/08** (2006.01)

(52) Cooperative Patent Classification (CPC):
**G01C 3/06; G01S 7/481; G02B 3/06; G02B 3/08**

(86) International application number:
**PCT/JP2024/002607**

(87) International publication number:
**WO 2024/162240 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.02.2023 JP 2023014154**

(71) Applicant: **Panasonic Intellectual Property
Management Co., Ltd.
Kadoma-shi, Osaka 571-0057 (JP)**

(72) Inventors:
• **SHIRAISHI, Masaru
Kadoma-shi, Osaka 571-0057 (JP)**
• **FUKAKUSA, Masaharu
Kadoma-shi, Osaka 571-0057 (JP)**
• **NOZAKI, Shinichiro
Kadoma-shi, Osaka 571-0057 (JP)**
• **TABA, Mayu
Kadoma-shi, Osaka 571-0057 (JP)**
• **MATSUURA, Norihiro
Kadoma-shi, Osaka 571-0057 (JP)**

(74) Representative: **Grünecker Patent- und
Rechtsanwälte
PartG mbB
Leopoldstraße 4
80802 München (DE)**

(54) **LENS AND OPTICAL SENSOR SYSTEM**

(57)     An object of the present disclosure is to condense incident light more accurately even if the incident light has traveled a distance falling with a broader range before being incident on a lens. A lens (1) includes: a lens surface region (2) having a lens surface (20) that condenses incident light; and a non-lens surface region (3) in which the lens surface (20) is nonexistent. The lens surface (20) includes: a first lens surface (21) that is a convex lens surface and is configured as a convex curved surface (CV1) having a vertex (P1); and a second lens surface (22) that is an aspheric surface and has a different curvature from the first lens surface (21). An axis (222) of a principal ray defined with respect to the second lens surface (22) is non-coaxial with an axis (211) of a principal ray defined with respect to the first lens surface (21).

*FIG. 1*

EP 4 660 671 A1

## Description

### Technical Field

The present disclosure generally relates to a lens and an optical sensor system. More particularly, the present disclosure relates to a lens having a lens surface that condenses incident light and also relates to an optical sensor system including such a lens.

### Background Art

Patent Literature 1 discloses a laser radar device. The laser radar device includes a laser radar unit and a controller for the laser radar unit. The laser radar unit includes an optical block. The optical block includes: a light-emitting element serving as a light source of a laser beam; a projection lens defining the projection axis of the laser beam; a light-receiving lens for condensing a reflected light beam which is the laser beam that has been reflected from an object; and a photosensitive element for receiving the reflected light beam that has been condensed by the light-receiving lens. The light-receiving lens is provided with a long-range lens portion which has an aspheric shape, and which may guide the reflected light beam parallel to a light-receiving axis to the photosensitive element. In addition, the light-receiving lens is further provided with a short range lens portion which has the shape of a cylinder having its center defined by a center axis perpendicular to the light-receiving axis and which may guide a part of the reflected light beam parallel to the light-receiving axis and a part of the reflected light beam not parallel to the light-receiving axis to the photosensitive element. This laser radar device achieves the advantage of broadening the detection range of an object.

### Citation List

### Patent Literature

Patent Literature 1: JP 2021-47141 A

### Summary of Invention

According to Patent Literature 1, a distance equal to or shorter than 1.5 m is defined to be a "short range" and a distance longer than 1.5 m is defined to be a "long range." That is to say, according to Patent Literature 1, the short-range lens portion and the long-range lens portion are provided with a distance of 1.5 m defined to be their boundary. Nevertheless, the light-receiving lens (lens) disclosed in Patent Literature 1 would be unable to secure a sufficient quantity of received light as for a light beam coming from a light source at as ultrashort a distance as 50 mm, or at as long a distance as 5 m (in other words, a distance much shorter than 1.5 m), or at a distance rather longer than 1.5 m.

In view of the foregoing background, it is therefore an object of the present disclosure to provide a lens contributing to condensing incident light more accurately even if the incident light has traveled a distance falling within a broader range before being incident on the lens and also provide an optical sensor system.

A lens according to an aspect of the present disclosure includes: a lens surface region having a lens surface that condenses incident light; and a non-lens surface region in which the lens surface is nonexistent. The lens surface includes: a first lens surface that is a convex lens surface and is configured as a convex curved surface having a vertex; and a second lens surface that is an aspheric surface and has a different curvature from the first lens surface. An axis of a principal ray defined with respect to the second lens surface is non-coaxial with an axis of a principal ray defined with respect to the first lens surface.

An optical sensor system according to another aspect of the present disclosure includes a projector, the lens described above, and a photosensitive element. The projector projects a laser beam toward an object of measurement. The lens condenses reflected light coming from the object of measurement. The photosensitive element receives the light condensed by the lens and transduces the light into an electrical signal. The photosensitive element is arranged to align a light-receiving axis of the photosensitive element with the optical axis passing through the vertex. A projection axis of the projector and the light-receiving axis are parallel to each other with respect to the optical axis.

### Brief Description of Drawings

[FIG. 1] FIG. 1 is a perspective view illustrating the appearance of a lens according to an exemplary embodiment as viewed from in front of the lens;

[FIG. 2] FIG. 2 is a schematic front view of the lens;

[FIG. 3] FIG. 3 is a lens sag chart showing the lens sag depth of the lens with respect to a vertex of a first lens surface;

[FIG. 4] FIG. 4A is a conceptual diagram illustrating a situation where an optical sensor system including the lens is used in a "long range" application; FIG. 4B is a conceptual diagram illustrating a situation where the optical sensor system is used in an "ultrashort range" application;

[FIG. 5] FIG. 5 shows a block configuration for the optical sensor system;

[FIG. 6] FIG. 6A is a perspective view illustrating the appearance of a plano-convex lens for use to describe a first lens surface of the lens; FIG. 6B is a perspective view illustrating the appearance of a cylindrical lens for use to describe a second lens surface of the lens;

[FIG. 7] FIG. 7 is a graph showing distance measurement characteristics of the lens;

[FIG. 8] FIG. 8A is a conceptual diagram illustrating Application Example 1 of the optical sensor system; FIG. 8B is a conceptual diagram illustrating Application Example 2 of the optical sensor system;

[FIG. 9] FIG. 9A is a schematic front view illustrating Variation 1-1 of the lens; FIG. 9B is a schematic front view illustrating another example of Variation 1-1 of the lens;

[FIG. 10] FIG. 10A is a schematic front view illustrating Variation 1-2 of the lens; FIG. 10B is a schematic front view illustrating another example of Variation 1-2 of the lens;

[FIG. 11] FIG. 11 is a schematic front view illustrating Variation 2 of the lens;

[FIG. 12] FIG. 12A is a schematic front view illustrating Variation 3 of the lens; FIG. 12B is a schematic front view illustrating another example of Variation 3 of the lens;

[FIG. 13] FIG. 13A is a schematic front view illustrating Variation 4 of the lens; FIG. 13B is a cross-sectional view thereof taken along the plane I-I shown in FIG. 13A;

[FIG. 14] FIG. 14A is a schematic front view illustrating still another example of Variation 4 of the lens; FIG. 14B is a cross-sectional view taken along the plane II-II shown in FIG. 14A;

[FIG. 15] FIG. 15A is a schematic front view illustrating Variation 5 of the lens; FIG. 15B is a perspective view illustrating the appearance of a toroidal lens for use to describe a second lens surface according to Variation 5; FIG. 15C is a perspective view illustrating the appearance of the cylindrical lens of the lens;

[FIG. 16] FIG. 16 is a conceptual diagram illustrating cross-sectional shapes of multiple projected beam spots for use to describe a variation (Variation 6) of a projector included in the optical sensor system;

[FIG. 17] FIG. 17 is a graph covering a detection range of 100 mm to 400 mm to show the distance measurement characteristics of multiple lenses respectively corresponding to the multiple projected beam spots;

[FIG. 18] FIG. 18A is a schematic front view illustrating Variation 7 of the lens; FIG. 18B is a cross-sectional view taken along the plane III-III shown in FIG. 18A;

[FIG. 19] FIG. 19 is a perspective view illustrating the appearance of Variation 8 of the lens as viewed from in front of the lens;

[FIG. 20] FIG. 20A is a characteristic diagram showing a light intensity distribution of the lens shown in FIG. 1; FIG. 20B is a characteristic diagram showing a light intensity distribution according to Variation 8 of the lens;

[FIG. 21] FIG. 21 is a graph showing distance measurement characteristics of Variation 8 of the lens; and

[FIG. 22] FIG. 22 is a perspective view illustrating the appearance of a cylindrical lens to describe a second lens surface according to Variation 8 of the lens.

**Description of Embodiments**

(Overview)

A lens and optical sensor system according to an exemplary embodiment and its variations will now be described with reference to the accompanying drawings. Note that the embodiment and its variations to be described below are only an exemplary one of various embodiments of the present disclosure and its variations and should not be construed as limiting. Rather, the exemplary embodiment and its variations may be readily modified in various manners depending on a design choice or any other factor without departing from the scope of the present disclosure. Note that the variations to be described below may be adopted in combination as appropriate.

The drawings to be referred to in the following description of an embodiment and its variations are all schematic representations. Thus, the ratio of the dimensions (including thicknesses) of respective constituent elements illustrated on the drawings does not always reflect their actual dimensional ratio.

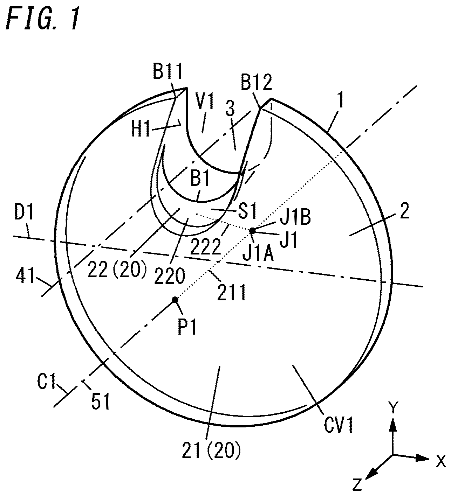

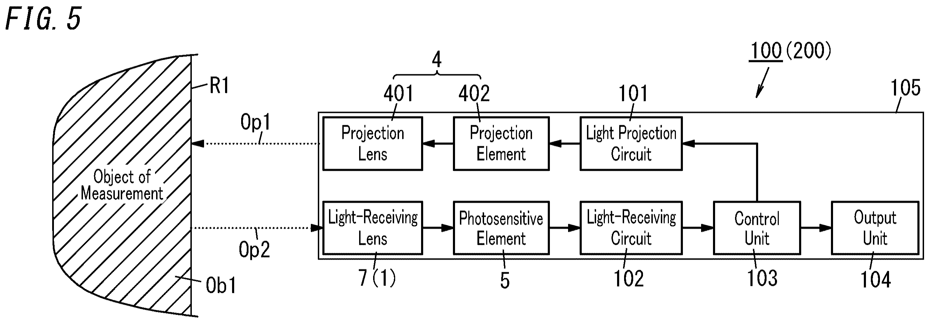

A lens 1 (refer to FIG. 1) according to an aspect is supposed to be applied to an optical sensor system 100 (refer to FIG. 5), for example. Particularly, the optical sensor system 100 is supposed to be, as an example, a so-called "time of flight (TOF)" sensor (system) 200 for measuring the distance to an object of measurement Ob1 based on the time of flight of light. The lens 1 is supposed to be applied as a light-receiving lens 7 (refer to FIG. 5) of the TOF sensor 200. However, the lens 1 does not have to be used as the light-receiving lens 7 of the TOF sensor 200. Alternatively, the lens 1 may also be used as a light-receiving lens of a photoelectric sensor for detecting, for example, the presence or absence of an object (such as glass, metal, non-metal, or liquid) or any change in the surface condition of the object. Still alternatively, the lens 1 may also be used as a lens applicable to a system for analyzing the properties of a material based on, for example, reflected light of a laser beam that irradiates the material.

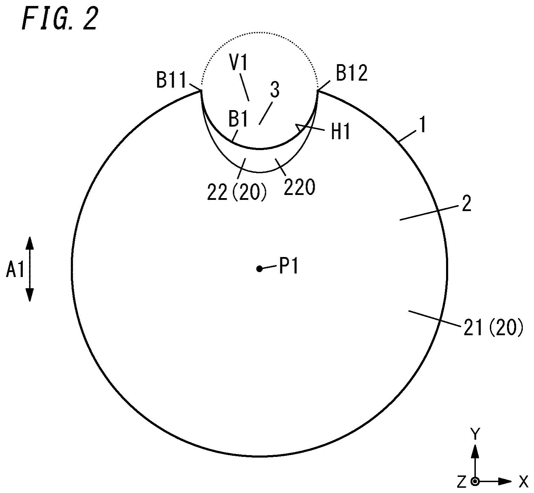

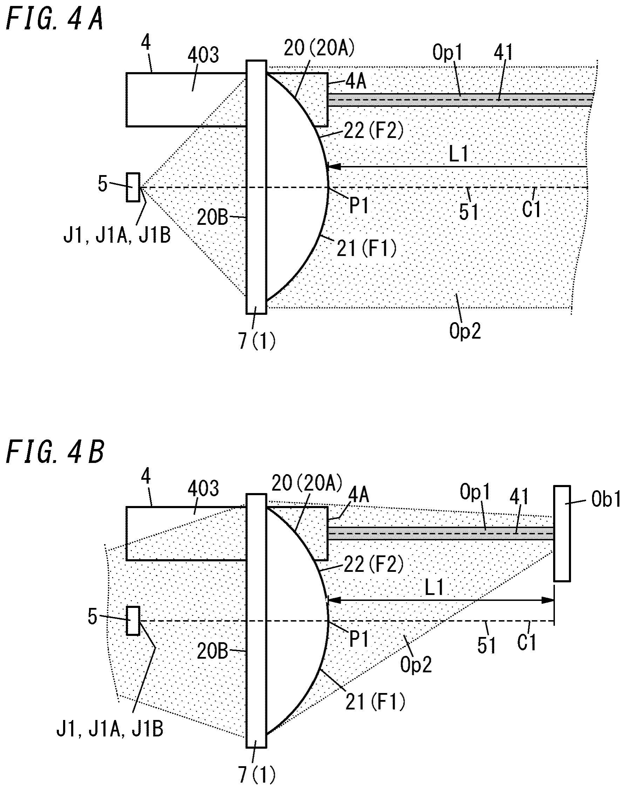

As shown in FIG. 1, the lens 1 includes: a lens surface region 2 having a lens surface 20 that condenses incident light (such as reflected light Op2; refer to FIGS. 4A and 4B); and a non-lens surface region 3 in which the lens surface 20 is nonexistent. In the example shown in FIG. 1, the non-lens surface region 3 has a cutout structure V1 in which a boundary B1 is recessed inward with respect to the lens surface region 2 when viewed along an optical axis C1. That is to say, part of the peripheral edge of the lens surface region 2 is recessed when viewed along the optical axis C1 (refer to FIG. 2). As used herein, the "optical axis C1" refers to, for example, the axis passing through the vertex P1 of the first lens surface 21 (to be described later) and an image point J1A of the first lens surface 21. FIG. 1 is a perspective view illustrating the appearance of the lens 1. FIG. 2 is a front view of the lens 1 as viewed along the optical axis C1.

The lens surface 20 includes: the first lens surface 21 that is a convex lens surface and is configured as a convex curved surface CV1 having a vertex P1; and a second lens surface 22 that is an aspheric surface and has a different curvature from the first lens surface 21. An image point J1B of the second lens surface 22 is formed at the same spatial coordinates as an image point J1A of the first lens surface. That is to say, the axes 211 and 222 of principal rays each pass through the image point J1 of the lens 1 (refer to FIG. 1). The axis 222 of the principal ray with respect to the second lens surface 22 is defined to be non-coaxial with the axis 211 of the principal ray with respect to the first lens surface 21. As used herein, the "axis of the principal ray" refers to an axis that passes through the center of the lens surface, the image point J1A of the first lens surface 21, and the image point J1B of the second lens surface 22. The first lens surface 21 and the second lens surface 22 have mutually different axes of principal rays. Note that in FIG. 4, the photosensitive element 5 is illustrated at the image point J1A of the first lens surface 21 and the image point J1B of the second lens surface 22 for the sake of convenience. That is to say, if the lens 1 is applied to the optical sensor system 100, both the axis 211 of the principal ray with respect to the first lens surface 21 and the axis 222 of the principal ray with respect to the second lens surface 22 pass through the photosensitive element 5. Note that the image points J1, J1A, J1B shown in FIG. 1 are exemplary image points with respect to an object located at a certain position, and the positions of these image points may shift depending on the distance from the lens 1 to the object. Nevertheless, even if these image points have shifted, the axis 222 of the principal ray with respect to the second lens surface 22 and the axis 211 of the principal ray with respect to the first lens surface 21 still maintain the non-coaxial relationship to say the least.

Also, in the following description, the second lens surface 22 is interposed between the first lens surface 21 and the non-lens surface region 3 to extend along at least a part of the boundary B1 between the lens surface region 2 and the non-lens surface region 3 when viewed along the optical axis C1 passing through the vertex P1.

According to this configuration for the lens 1, the first lens surface 21 and the second lens surface 22 are provided such that the axis 222 of the principal ray with respect to the second lens surface 22 is non-coaxial with the axis 211 of the principal ray with respect to the first lens surface 21. Thus, this lens 1 achieves the advantage of contributing to condensing incident light more accurately even if the incident light has traveled a distance falling within a broader range before being incident on the lens 1.

An optical sensor system 100 according to an aspect includes a projector 4, the lens 1 (light-receiving lens 7) described above, and a photosensitive element 5 as shown in FIG. 5. The projector 4 projects a laser beam Op1 toward an object of measurement Ob1. The lens 1 condenses light Op2 reflected from the object of measurement Ob1. The photosensitive element 5 receives the light condensed by the lens 1 and transduces the light into an electrical signal. The photosensitive element 5 is arranged such that a light-receiving axis 51 of the photosensitive element 5 is aligned with the optical axis C1. A projection axis 41 of the projector 4 and the light-receiving axis 51 are parallel to each other with respect to the optical axis C1. As used herein, if something is "parallel to" something else, these two things do not have to exactly parallel to each other but an angle of about +10 degrees, for example, may be formed between the two things. This configuration achieves the advantage of providing an optical sensor system 100 including a lens 1 contributing to condensing incident light more accurately even if the incident light has traveled a distance falling within a broader range before being incident on the lens 1.

(Details)

(Overall configuration)

A lens 1 and optical sensor system 100 (TOF sensor 200) according to this embodiment will now be described in detail with reference to FIGS. 1-8B. In the following description, X-, Y-, and Z-axes are defined as follows with respect to the lens 1. Specifically, a direction parallel to the optical axis C1 passing through the vertex P1 of the first lens surface 21 is herein defined to be a Z-axis direction. Also, the arrangement direction A1 (refer to FIG. 2) in which the non-lens surface region 3, the second lens surface 22, and the first lens surface 21 are arranged one on top of another when viewed along the optical axis C1 (Z-axis direction) is herein defined to be a Y-axis direction. The X-axis direction is perpendicular to each of the Y-axis direction and Z-axis direction defined in this manner.

The lens 1 forms, for example, a plano-convex lens as a whole. When viewed as a whole, one surface of the lens 1 on the positive side of the Z-axis is generally convex toward the positive side of the Z-axis, while the other surface of the lens 1 on the negative side of the Z-axis generally has a planar shape. However, this is only an example and should not be construed as limiting. Alternatively, the other surface of the lens 1 on the negative side of the Z-axis does not have to have a planar shape but may also be generally convex toward the negative side of the Z-axis. The lens 1 has thickness in the Z-axis direction.

FIG. 2 is a front view of a lens 1, which is a more schematic version of the lens 1 shown in FIG. 1, as viewed from the positive side of the Z-axis. In front view, the lens 1 generally has the shape of an exact circle. Nevertheless, the overall shape of the lens 1 in front view is not limited to any particular one but may also be the shape of an elongate racetrack, instead of the circular shape.

As shown in FIGS. 1 and 2, the lens 1 includes the lens surface region 2 and the non-lens surface region 3. As can be seen from FIG. 2, which is a front view of a schematic version of the lens 1, there is a generally arc-shaped boundary B1 between the lens surface region 2 and the non-lens surface region 3 as viewed from the positive side of the Z-axis.

The lens surface region 2 has the lens surface 20 that condenses the light that has been incident thereon from the positive side of the Z-axis. If the lens 1 is applied to the TOF sensor 200, the "incident light" as used herein may include a "part of reflected light Op2" produced by having the laser beam Op1 projected from the projector 4 reflected from the surface of the object of measurement Ob1 (i.e., a reflective surface thereof; refer to FIG. 5). Note that the light incident on the lens 1 is not limited to the reflected light.

In short, the lens surface 20 may be a light incident surface 20A (refer to FIGS. 4A and 4B). On the other hand, the other surface (i.e., the surface of the lens 1 on the negative side of the Z-axis) opposite from the lens surface 20 may be a light emerging surface 20B (refer to FIGS. 4A and 4B). The optical axis C1 intersects at right angles with the light emerging surface 20B.

The lens surface 20 includes the first lens surface 21 that is a convex lens surface and the second lens surface 22 that is an aspheric surface. In other words, the lens 1 is a divided lens in which the lens surface 20 is divided into the first lens surface 21 and the second lens surface 22. Note that in this embodiment, the first lens surface 21 is supposed to be an aspheric surface as an example.

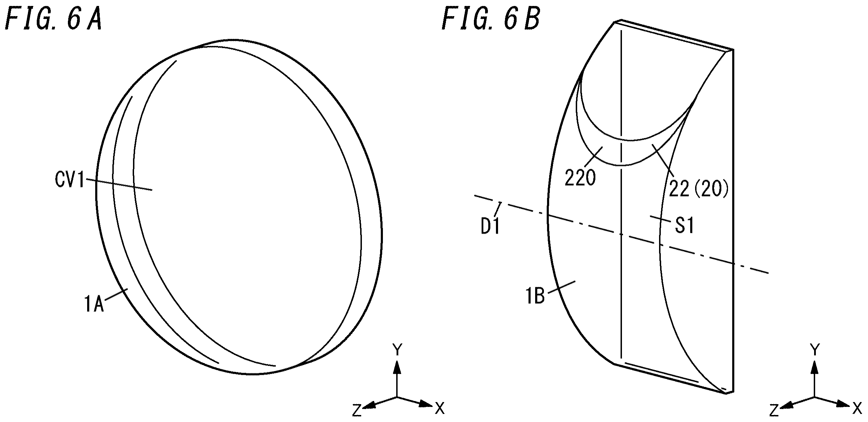

The first lens surface 21 is configured as a convex curved surface CV1 including the vertex P1. With this regard, FIG. 6A illustrates a plano-convex lens 1A having the convex curved surface CV1. The lens 1 includes, as the first lens surface 21, a part of the convex curved surface CV1 of the plano-convex lens 1A shown in FIG. 6A.

The first lens surface 21 may have a convex curved surface CV1 defined by the following lens equation (1), where z is a lens sag depth in a direction parallel to the optical axis C1 (i.e., the Z-axis direction), C is the curvature, k is a conic constant, r is a radius coordinate, and $\alpha i$ is an aspheric coefficient.

$$z = \frac{cr^2}{1+\sqrt{1-(1+k)c^2r^2}} + \sum_{i=1}^{12} \alpha_i r^i$$

$$(1)$$

The first lens surface 21 is a "long range" lens surface when classified according to the distance to the object of measurement Ob1. The first lens surface 21 is applicable to not only a long range but also an intermediate distance as well. In the following description, the first lens surface 21 will be hereinafter sometimes referred to as a "long-range lens surface F1" (refer to FIGS. 4A and 4B). In this embodiment, the "intermediate to long range" is supposed to refer to a situation where the distance L1 (refer to FIG. 4A) from the lens 1 (e.g., from the vertex P1 of the first lens surface 21) to the object of measurement Ob1 falls within the range from 500 mm to the vicinity of 5,000 mm. In other words, the first lens surface 21 may be configured as a surface that may condense the reflected light Op2 reflected from the object of measurement Ob1, which is located at a distance of approximately 5,000 mm from the lens 1, to such a degree as to make the quantity of the light received at the photosensitive element 5 not less than the lower limit value (threshold value). As used herein, the "lower limit value" refers to a threshold value which is set at a value to be subjected to distance measurement by the TOF sensor 200 and may be, for example, a quantity of light received of 10 μW. In addition, the numerical value of 5,000 mm is an exemplary guidepost to the "longest distance" of the "long range" and should not be construed as strictly limiting the "longest distance" of the "long range."

The second lens surface 22 has a different curvature from the first lens surface 21. The second lens surface 22 includes a cylindrical lens surface 220 (refer to FIG. 1). With this regard, FIG. 6B illustrates a plano-convex cylindrical lens 1B having an aspheric surface S1 (i.e., the cylindrical lens surface 220). The lens 1 includes, as the second lens surface 22, a part of the aspheric surface S1 (i.e., the cylindrical lens surface 220) of the plano-convex cylindrical lens 1B shown in FIG. 6B. In FIG. 6B, a region of the cylindrical lens surface 220, used as the second lens surface 22, of the cylindrical lens 1B is indicated for your reference. Note that the "cylindrical lens 1B" as used herein does not have to have such a semi-cylindrical shape but may also refer to a lens having a lens surface configured as a part of a hyperbola. In short, the aspheric surface S1 does not have to be a semi-cylindrical curved surface in a strict sense of the word.

The second lens surface 22 may have an aspheric surface S1 defined by the following lens equation (2), where z is a lens sag depth in a direction parallel to the optical axis C1 (i.e., the Z-axis direction), C is the curvature, k is a conic constant, and y is a Y-coordinate. As described above, the curvature C of the aspheric surface S1 of the second lens surface 22 is different from the curvature C of the first lens surface 21. Optionally, this lens equation (2) may include an aspheric coefficient.

$$z = \frac{cy^2}{1+\sqrt{1-(1+k)c^2y^2}}$$

$$(2)$$

The second lens surface 22 is a short-range lens surface with regard to the distance to the object of measurement Ob1. In the following description, the second lens surface 22 will be hereinafter sometimes referred to as an "ultrashort-range lens surface F2" (refer to FIGS. 4A and 4B). In this embodiment, the "ultrashort range" is supposed to refer to a situation where the distance L1 (refer to FIG. 4B) from the lens 1 (e.g., from the vertex P1 of the first lens surface 21) to the object of measurement Ob1 falls within the range from 50 mm to the vicinity of 500 mm. In other words, the first lens surface 21 may be configured as a surface that may condense the reflected light Op2 reflected from the object of measurement Ob1, which is located at a distance of approximately 50 mm from the lens 1, to such a degree as to make the quantity of the light received at the photosensitive element 5 not less than the lower limit value (threshold value). As used herein, the numerical value of 50 mm is an exemplary guidepost to the "shortest range" of the "ultrashort range" and should not be construed as strictly limiting the "shortest range" of the "ultrashort range."

The ratio of the area occupied by the second lens surface 22 to the overall area of the lens surface 20 is smaller than the ratio of the area occupied by the first lens surface 21 to the overall area of the lens surface 20.

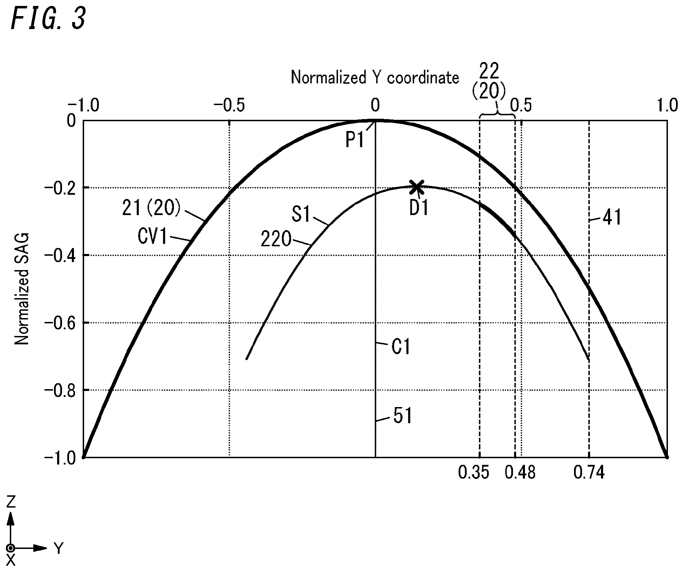

FIG. 3 is a lens sag chart showing the lens sag depths of the convex curved surface CV1 and aspheric surface S1 of the lens 1 as measured in a direction parallel to the optical axis C1 (Z-axis direction) with the vertex P1 plotted as the origin "0." In FIG. 3, the cross × indicates the position of the generatrix D1 (which extends in the X-axis direction) on the aspheric surface S1 (cylindrical lens surface 220) of the second lens surface 22. Note that in FIG. 3, the lens sag depth on the ordinate is normalized by the thickness of the lens 1 (to fall within the range from "0" to "-1") and the abscissa (Y coordinate) is normalized by the diameter of the lens 1 (to fall within the range from "-1" to "-1").

The generatrix direction (i.e., a direction having no curvature or power) with respect to the cylindrical lens surface 220 is parallel to the X-axis. The "generatrix D1" as used herein refers to a (insubstantial) virtual line drawn to extend in the generatrix direction and pass through a point set on the aspheric surface S1 which is located most distant from the plane opposite from the aspheric surface S1 as shown in FIG. 6B. The generatrix direction (X-axis direction) aligned with the generatrix D1 (refer to FIG. 1) with respect to the cylindrical lens surface 220 intersects (e.g., at right angles) with the arrangement direction A1 in which the non-lens surface region 3, the second lens surface 22, and the first lens surface 21 are arranged one on top of another when viewed along the optical axis C1.

The part used as the second lens surface 22 of the lens 1 which forms part of the aspheric surface S1 shown in FIG. 6B corresponds to the Y coordinate range from 0.35 to 0.48 shown in FIG. 3 which is normalized by the diameter of the lens 1. That is to say, the second lens surface 22 is configured not to include the generatrix D1 with respect to the cylindrical lens surface 220. In the lens 1, the second lens surface 22 is arranged to be adjacent to the non-lens surface region 3. Note that the Y coordinate value of 0.74 normalized by the diameter of the lens 1 in FIG. 3 indicates the position of the projection axis 41 of the projector 4 (to be described later).

Furthermore, the second lens surface 22 is arranged to offset the generatrix D1 with respect to the cylindrical lens surface 220 to the positive side of the Y-axis with respect to the vertex P1 of the first lens surface 21 as shown in FIG. 3.

The non-lens surface region 3 is a region in which the lens surface 20 is nonexistent. In this embodiment, a peripheral edge portion of the lens 1 on the positive side of the Y-axis is cut out. Specifically, the lens 1 is provided with a through hole H1 which penetrates through the peripheral edge portion of the lens 1 in the Z-axis direction. The through hole H1 is open on the outer side of the lens 1 when viewed along the optical axis C1 (in the Z-axis direction). In other words, the non-lens surface region 3 has a cutout structure V1 in which the boundary B1 is recessed inward with respect to the lens surface region 2 when viewed along the optical axis C1. In the example shown in FIG. 1, a substantially semi-circular through hole H1 is provided through a peripheral edge portion of the lens 1 on the positive side of the Y-axis. The boundary B1 is recessed in substantially an arc shape toward the vertex P1 (i.e., in a direction corresponding to the negative side of the Y-axis) when viewed along the optical axis C1.

In this embodiment, the first lens surface 21 has the axis 211 of a principal ray (refer to FIG. 1) which passes through the center of the first lens surface 21 and points toward the image point J1A of the first lens surface 21. The second lens surface 22 has the axis 222 of a principal ray (refer to FIG. 1) which passes through the center of the second lens surface 22 and points toward the image point J1B of the second lens surface 22. Note that the image point J1A of the first lens surface 21 and the image point J1B of the second lens surface 22 are formed at the same spatial coordinates and correspond to the image point J1 of the lens 1. That is to say, the axes 211 and 222 of the principal rays each pass through the image point J1 of the lens 1 (refer to FIG. 1). In this embodiment, the axis 222 of the principal ray with respect to the second lens surface 22 is arranged to be non-coaxial with the axis 211 of the principal ray with respect to the first lens surface 21 as shown in FIG. 1. Also, the second lens surface 22 is interposed between the first lens surface 21 and the non-lens surface region 3 to extend along at least a part of the boundary B1 between the lens surface region 2 and the non-lens surface region 3 when viewed along the optical axis C1 passing through the vertex P1 (refer to FIG. 2). For example, the second lens surface 22 is formed in the shape of a crescent that extends along at least a part of the boundary B1 when viewed along the optical axis C1. Note that in the schematic lens 1 shown in FIG. 2, the second lens surface 22 formed in the crescent shape is arranged to extend along the boundary B1 from one end B11 through the other end B12 of the arc-shaped boundary B1 in the X-axis direction. Alternatively, the second lens surface 22 may also be arranged to extend along the boundary B1 inside both of these ends B11 and B12 as shown in FIG. 1. The second lens surface 22 does not have to have the crescent shape but may also have a half-moon shape or a rectangular shape. Nevertheless, forming the second lens surface 22 in such a crescent shape as is done in this embodiment makes it easier to reduce the ratio of the area occupied by the second lens surface 22 to the overall area of the lens surface 20. That is to say, the light needs to travel over a longer distance in the case of the "long range" than in the case of the "ultrashort range," thus making it easier for the reflected light Op2 to diffuse while propagating through the air. Thus, to condense the reflected light Op2 from the long range with maximum efficiency, the area occupied by the first lens surface 21 (long-range lens surface F1) is preferably as large as possible. Thus, reducing the area occupied by the second lens surface 22 allows the area occupied by the first lens surface 21 (long range lens 1 F1) to be increased, thus enabling the incident light to be condensed more accurately.

As can be seen, the lens 1 includes the long-range lens surface F1 and the ultrashort-range lens surface F2, thus achieving the advantage of contributing to condensing incident light more accurately even if the incident light has traveled a distance falling within a broader range before being incident on the lens 1 from the object of measurement Ob1, for example. In addition, the generatrix direction (X-axis direction) with respect to the second lens surface 22 intersects (e.g., at right angles) with the arrangement direction A1 in which the non-lens surface region 3, the second lens surface 22, and the first lens surface 21 are arranged one on top of another when viewed along the optical axis C1, thus making it easier to realize a second lens surface 22 that allows the incident light to be condensed more accurately. Furthermore, the second lens surface 22 includes the cylindrical lens surface 220, thus allowing for imparting appropriate angle of view characteristics to the incident light. This makes it easier for the incident light to reach the photosensitive element 5 (to be described later). Particularly, the second lens surface 22 is configured not to include the generatrix D1 with respect to the cylindrical lens surface 220, thus making it easier to realize a second lens surface 22 that allows the incident light to be condensed more accurately.

In this embodiment, the second lens surface 22 is located at a lower level in the Z-axis direction than the first lens surface 21 is to be recessed with respect to the first lens surface 21 (refer to FIGS. 1 and 3). In other words, there is a level difference in the Z-axis direction between the first lens surface 21 and the second lens surface 22 and the second lens surface 22 is located at level lower in the Z-axis direction by this level difference than the first lens surface 21 is. However, this is only an example and should not be construed as limiting. Alternatively, such a level difference may be eliminated. Still alternatively, the second lens surface 22 may even be located at a higher level in the Z-axis direction than the first lens surface 21 is to be raised with respect to the first lens surface 21.

As shown in FIG. 5, the TOF sensor 200 includes the projector 4, the light-receiving lens 7 (lens 1), the photosensitive element 5, a light projection circuit 101, a light-receiving circuit 102, a control unit 103, and an output unit 104. In addition, the TOF sensor 200 further includes a single or a plurality of mount boards (such as a printed wiring board) on which the projector 4, the light-receiving lens 7, the photosensitive element 5, the light projection circuit 101, the light-receiving circuit 102, the control unit 103, the output unit 104, and other components are mounted, and a housing 105 (refer to FIG. 5) for housing or holding these components.

The projector 4 projects the laser beam Op1 toward the object of measurement Ob1. The projector 4 includes a projection lens 401, a projection element 402 (laser diode) serving as a light source, and a case 403 (refer to FIGS. 4A and 4B) that houses these members. The projection element 402 is electrically connected to the light projection circuit 101 and emits the laser beam Op1 in accordance with a drive instruction given by the light projection circuit 101. The projection lens 401 is arranged to face the projection element 402. The projector 4 has a light emerging surface 4A (refer to FIGS. 4A and 4B), through which the laser beam Op1 emerges to an external space. The light emerging surface 4A is supposed to be, for example, a lens surface, located on the positive side of the Z-axis, of the projection lens 401. The projection lens 401 is arranged inside the case 403 to expose the light emerging surface 4A thereof. The projection axis 41 of the projector 4 intersects at substantially right angles with the light emerging surface 4A.

In this embodiment, the light emerging surface 4A is located at substantially the same position in the Z-axis direction as the vertex P1 of the first lens surface 21.

The wavelength of the laser beam Op1 is not limited to any particular value. In this embodiment, the TOF sensor 200 is supposed to be used, for example, in a carrying step at a facility such as a factory. Thus, to allow the user (such as a surveillant in the facility) to check the projected beam spot of the laser beam Op1 with the eye, the laser beam Op1 is supposed to be visible light, of which the wavelength is, for example, in the vicinity of 660 nm falling within the red part of the spectrum.

Note that in this embodiment, the projected beam spot formed on a plane (X-Y plane) perpendicular to the projection axis 41 by the laser beam Op1 projected from the projector 4 is supposed to have an exact circle cross-sectional shape, for example. That is to say, if the laser beam Op1 is projected perpendicularly from the projector 4 to the surface (plane) of the object of measurement Ob1, then a projected beam spot in almost an exact circle shape is supposed to be formed on the surface.

The light projection circuit 101 outputs, in accordance with a control instruction given by the control unit 103, a drive signal to the projection element 402 with the emission intensity and emission time of the laser beam Op1 adjusted. The projection element 402 emits (projects) a pulsed light beam (i.e., the laser beam Op1) in accordance with the drive signal.

The light-receiving lens 7 is the lens 1 described above. The light-receiving lens 7 is arranged in the housing 105 to expose the lens surface 20 thereof such that the light Op2 reflected from the object of measurement Ob1 is incident on the light-receiving lens 7. The light-receiving lens 7 condenses the light Op2 reflected from the object of measurement Ob1.

The photosensitive element 5 is disposed behind the light-receiving lens 7 (i.e., located on the negative side of the Z-axis with respect to the light-receiving lens 7) as shown in FIGS. 4A and 4B. The photosensitive element 5 receives the light that has been condensed by the light-receiving lens 7 to transduce the light into an electrical signal (photoelectric signal). The photosensitive element 5 may be implemented as, for example, a photodiode. The photosensitive element 5 is electrically connected to the light-receiving circuit 102 to output the photoelectric signal to the light-receiving circuit 102. A light-receiving axis 51 of the photosensitive element 5 may, for example, intersect with the photosensitive plane of the photosensitive element 5 at right angles. The photosensitive element 5 is arranged to face the light emerging surface 20B of the light-receiving lens 7 to cause the light-receiving axis 51 to pass through the vertex P1 of the first lens surface 21 of the light-receiving lens 7 (in other words, to align the light-receiving axis 51 with the optical axis C1). The light-receiving axis 51 intersects with the light emerging surface 20B at right angles.

The photosensitive element 5 is disposed at the focus position of the first lens surface 21. As described above, the second lens surface 22 is arranged to offset the generatrix D1 with respect to the cylindrical lens surface 220 to the positive side of the Y-axis with respect to the vertex P1 of the first lens surface 21. Thus, the focus position of the second lens surface 22 is offset to the positive side of the Y-axis with respect to the focus position of the first lens surface 21 (i.e., the position of the photosensitive element 5).

The higher the frequency response characteristics of the TOF sensor 200 are, the higher the distance detection accuracy of the TOF sensor 200 is. That is why the smaller the size of the photosensitive element 5 is, the better. In this embodiment, the photosensitive element 5 is a microscopic photosensitive element, of which the photosensitive plane may have a width or diameter equal to or less than 1 mm, for example. The projection axis 41 of the projector 4 and the light-receiving axis 51 are parallel to each other with respect to the optical axis C1. In this case, the projection axis 41 and the light-receiving axis 51 do not have to be exactly parallel to each other but an angle of about ±10 degrees, for example, may be formed between the projection axis 41 and the light-receiving axis 51.

In addition, in this embodiment, the projection axis 41 and the light-receiving axis 51 are non-coaxial with each other.

The light-receiving circuit 102 may include, for example, an A/D converter circuit. The light-receiving circuit 102 makes the A/D converter circuit convert an analog photoelectric signal, representing the quantity of light received provided by the photosensitive element 5, into a digital photoelectric signal to output the digital photoelectric signal to the control unit 103.

The control unit 103 includes a computer system including one or more processors and a memory. At least some functions of the control unit 103 are performed by making the processor of the computer system execute a program stored in the memory of the computer system. The program may be stored in advance in the memory. Alternatively, the program may also be downloaded via a telecommunications line such as the Internet or distributed after having been stored in a non-transitory storage medium such as a memory card. The control unit 103 is electrically connected to the light projection circuit 101, the light-receiving circuit 102, and the output unit 104 to control these components 101, 102, 104.

The control unit 103 calculates, based on the photoelectric signal supplied from the light-receiving circuit 102, the amount of time between a point in time when the laser beam Op1 (pulsed light beam) was emitted from the projector 4 and a point in time when the reflected light Op2, produced by having the laser beam Op1 reflected from the object of measurement Ob1, is received at the photosensitive element 5. That is to say, the control unit 103 calculates the amount of time it has taken for the light beam to travel back and forth between the TOF sensor 200 and the object of measurement Ob1. Then, the control unit 103 calculates, based on the result of calculation, distance data (result of distance measurement) indicating the distance to the object of measurement Ob1 to have the output unit 104 output the distance data to an external device.

Meanwhile, in this embodiment, the projector 4 is placed inside the non-lens surface region 3. In this embodiment, the case 403 of the projector 4 has a generally cylindrical shape and the center axis of the cylinder of the case 403 intersects at approximately right angles with the light emerging surface 4A of the projection lens 401. The center axis of the cylinder of the case 403 is substantially aligned with the projection axis 41 of the projector 4. On the other hand, to have the case 403 fitted into the non-lens surface region 3, the non-lens surface region 3 has substantially the same shape as the case 403 when viewed in the Z-axis direction. The non-lens surface region 3 has the cutout structure V1. Thus, when viewed in the Z-axis direction, the peripheral edge portion of the case 403 on the negative side of the Y-axis is adjacent to the inner peripheral surface of the through hole H1 to be in contact with the inner peripheral surface of the through hole H1. Alternatively, the peripheral edge portion of the case 403 may also be out of contact with the inner peripheral surface of the through hole H1 with a narrow gap left between them. On the other hand, the peripheral edge portion of the case 403 on the positive side of the Y-axis does not face the inner peripheral surface of the through hole H1 but is exposed on the outside of the lens 1. Optionally, the projector 4 may be held by the lens 1 by press-fitting the case 403 into the through hole H1.

That is to say, the projector 4 and its projection axis 41 are positioned stably with respect to the lens 1 by the non-lens surface region 3 having the cutout structure V1. Alternatively, the projector 4 may also be configured to be movable at least partially while being placed inside the non-lens surface region 3. In that case, the direction of movement is not limited to any particular direction. For example, the TOF sensor 200 may have a mechanism that makes the projector 4 movable to form a tilt angle with respect to the Z-axis direction. Alternatively, the TOF sensor 200 may have a mechanism that makes the projection lens 401 movable in the Z-axis direction.

The lens 1 may be provided with, as the non-lens surface region 3, a recess that does not penetrate through the lens 1 in the Z-axis direction, instead of the through hole H1 that penetrates through the lens 1 in the Z-axis direction. The recess may be provided to make one surface of the lens 1 on the negative side of the Z-axis open and to be depressed toward the positive side of the Z-axis. Alternatively, the recess may also be provided to make the other surface of the lens 1 on the positive side of the Z-axis open and to be depressed toward the negative side of the Z-axis. The projector 4 may be placed to be fitted into the recess (i.e., the non-lens surface region 3) either tightly or loosely.

As can be seen, the lens 1 is provided with the non-lens surface region 3. Thus, placing the projector 4 in the non-lens surface region 3 makes the projection axis 41 and the light-receiving axis 51 closer to each other, thus contributing to reducing the size of the device (TOF sensor 200) in the X-axis direction and/or the Y-axis direction while allowing the lens 1 to condense the incident light even more accurately. In particular, the projector 4 is arranged to be adjacent to the second lens surface 22, thus allowing the photosensitive element 5 to receive a sufficient quantity of light while reducing the area occupied by the second lens surface 22. Consequently, this contributes to increasing the quantity of the reflected light Op2 received at the photosensitive element 5.

Furthermore, in this embodiment, the generatrix D1 with respect to the cylindrical lens surface 220 is interposed between the projection axis 41 and the light-receiving axis 51 as shown in FIGS. 1 and 3. That is to say, the second lens surface 22 is arranged to be offset in the Y-axis direction toward the positive side of the Y-axis with respect to the vertex P1 of the first lens surface 21. This allows the light-receiving lens 7 (lens 1) to even more accurately condense the incident light coming from the "ultrashort range." Consequently, the quantity of the light received at the photosensitive element 5 may increase.

(Distance measurement characteristics of lens)

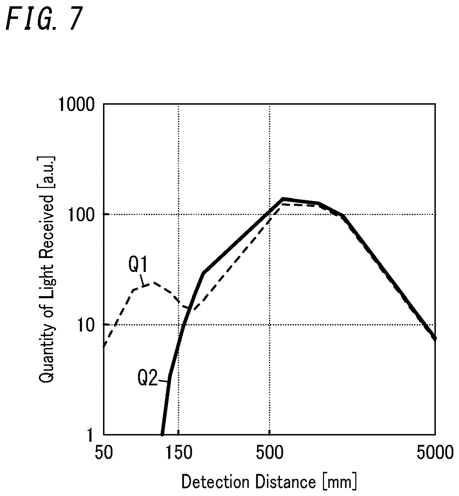

Next, the distance measurement characteristics of the lens 1 will be described with reference to FIG. 7. FIG. 7 is a double logarithmic graph showing the distance measurement characteristics (based on the results of simulation) of the lens 1 and a lens as a comparative example (which will be hereinafter referred to as a "single lens"). As used herein, the "single lens" refers to a plano-convex lens with only one lens surface. The single lens is a plano-convex lens having only the first lens surface 21 of the lens 1 and not having the second lens surface 22 of the lens 1.

In FIG. 7, the abscissa indicates the detection distance [mm] from the lens (lens 1 or the single lens) to a point of reflection, while the ordinate indicates the quantity of light [in an arbitrary unit (a. u.)] received at the photosensitive element 5. In this simulation, the object of measurement Ob1 was not irradiated with a laser beam and the reflected light thereof was not received at the lens (lens 1 or the single lens), but a point of reflection was set on the object of measurement Ob1 and the characteristics of the lens were inspected with the point of reflection regarded as a light source (such as a Lambertian light source).

In FIG. 7, the dashed curve Q1 indicates the distance measurement characteristics that were obtained using the lens 1, while the solid curve Q2 indicates the distance measurement characteristics that were obtained using the single lens.

As can be seen from the distance measurement characteristics Q1 and Q2 shown in FIG. 7, as for the "long range," the quantity of light received at the photosensitive element 5 using the lens 1 is substantially equal to the quantity of light received at the photosensitive element 5 using the single lens, and therefore, the lens 1 has almost as high light condensing accuracy as the single lens. As for the "ultrashort range" on the other hand, the quantity of light received at the photosensitive element 5 using the lens 1 is significantly larger than the quantity of light received at the photosensitive element 5 using the single lens, particularly when the detection distance falls within the range from around 50 mm to around 150 mm, and therefore, it can be seen that the lens 1 has superior light condensing accuracy to the single lens.

As can be seen, the lens 1 condenses the incident light coming from the "long range" through the entire lens surface 20 (i.e., the first lens surface 21 and the second lens surface 22) toward the photosensitive element 5, and condenses the incident light coming from the "ultrashort range" mostly through the second lens surface 22 toward the photosensitive element 5. That is to say, the second lens surface 22 condenses the incident light coming from the "ultrashort range" toward the photosensitive element 5 such that the incident light is refracted toward the negative side of the Y-axis to have an angle of view.

(Application example of TOF sensor)

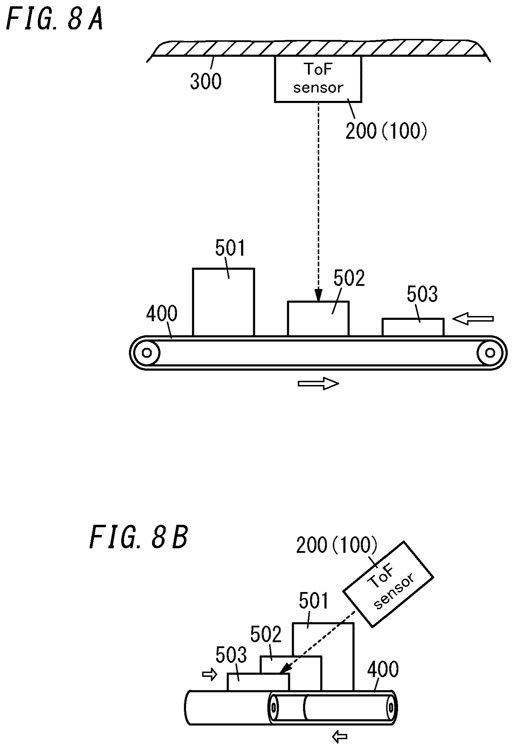

Next, an application example of the TOF sensor 200 (optical sensor system 100) will be described with reference to FIGS. 8A and 8B.

FIG. 8A is a conceptual diagram illustrating Application Example 1 of the TOF sensor 200. In Application Example 1, the TOF sensor 200 is fixed on a ceiling surface 300 inside a facility such as a factory or a distribution warehouse. Right under the TOF sensor 200, disposed is a carrier 400 such as a conveyor belt. The TOF sensor 200 measures the distances (in the vertical direction) to large-, medium-, and small-sized workpieces 501, 502, and 503 which are being carried by the carrier 400. The TOF sensor 200 outputs the results of measurement (distance data) to an external determination system. The external determination system may perform various types of processing based on the results of measurement. The TOF sensor 200 may be a distance image sensor that uses the TOF method. In that case, the distance data may be distance image data. Optionally, the external determination system may perform inspection processing on the surface conditions of the workpieces 501, 502, and 503 based on the distance image data.

FIG. 8B is a conceptual diagram illustrating Application Example 2 of the TOF sensor 200. In this Application Example 2, the TOF sensor 200 is also disposed inside a facility such as a factory or a distribution warehouse. The TOF sensor 200 is fixed by a fixing jig diagonally above the carrier 400 to measure the distances to the large-, medium-, and small-sized workpieces 501, 502, and 503 in a diagonal direction. The TOF sensor 200 outputs the results of measurement (distance data) to an external determination system, for example. The external determination system may perform determination processing of automatically determining the types of the workpieces 501, 502, and 503 based on the distance data obtained in the diagonal direction. In particular, this external determination system uses only one TOF sensor 200 but may determine the type of the given workpiece more accurately by using the distance data obtained in the diagonal direction.

(Variation 1-1)

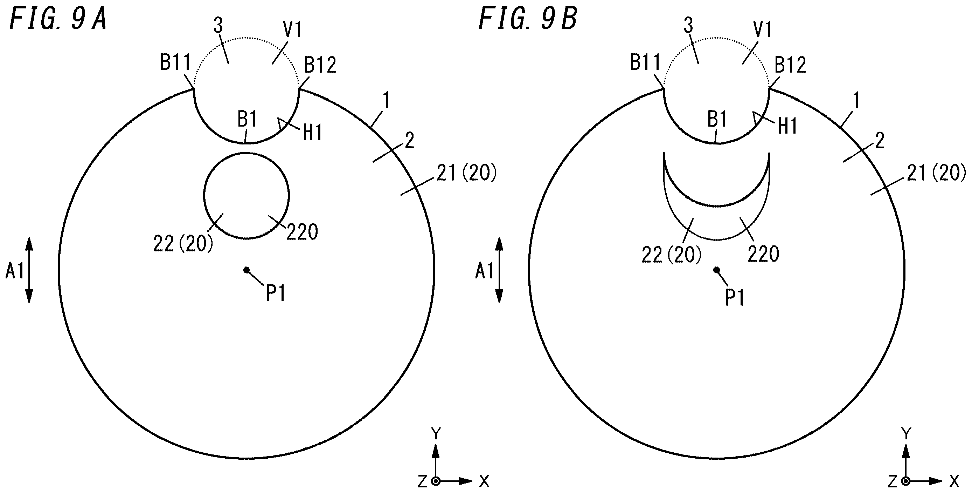

Next, a lens 1 according to this variation (Variation 1-1) will be described in detail with reference to FIG. 9A. In the following description, any constituent element of the lens 1 according to this Variation 1-1, having substantially the same function as a counterpart of the lens 1 according to the exemplary embodiment described above, will be designated by the same reference numeral as that counterpart's, and description thereof will be omitted as appropriate herein. Note that FIG. 9A, as well as FIG. 2, is a front view of a schematic version of the lens 1 according to Variation 1-1 (as viewed from the positive side of the Z-axis).

The lens 1 according to this Variation 1-1, as well as the lens 1 according to the exemplary embodiment described above, is also provided with a through hole H1 that penetrates through a peripheral portion of the lens 1 in the Z-axis direction, and the non-lens surface region 3 also has the cutout structure V1 in which the boundary B1 is recessed inward with respect to the lens surface region 2 when viewed along the optical axis C1. In the lens 1 according to this Variation 1-1, however, the second lens surface 22 is out of contact with the boundary B1, which is a difference from the lens 1 according to the exemplary embodiment described above. The second lens surface 22 may be configured as, for example, the cylindrical lens surface 220 and has a circular shape. In the example shown in FIG. 9A, the second lens surface 22 is located between the boundary B1 and the vertex P1 so as to be out of contact with the boundary B1.

Note that the cylindrical lens surface 220 does not have to be circular. Alternatively, the cylindrical lens surface 220 may also be, for example, crescent or elliptical. For example, FIG. 9B illustrates a lens 1 illustrating another example of Variation 1-1. As shown in FIG. 9B, the cylindrical lens surface 220 may also be crescent.

(Variation 1-2)

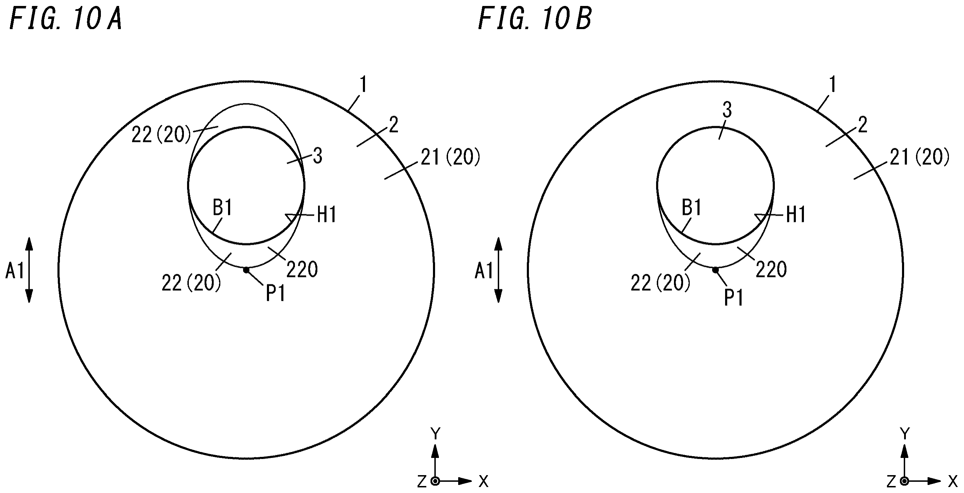

Next, a lens 1 according to this variation (Variation 1-2) will be described in detail with reference to FIGS. 10A and 10B. In the following description, any constituent element of the lens 1 according to this Variation 1-2, having substantially the same function as a counterpart of the lens 1 according to the exemplary embodiment described above, will be designated by the same reference numeral as that counterpart's, and description thereof will be omitted as appropriate herein. Note that FIGS. 10A and 10B, as well as FIG. 2, are front views of a schematic version of the lens 1 according to Variation 1-2 (as viewed from the positive side of the Z-axis).

In the exemplary embodiment described above, the lens 1 is provided with a through hole H1 that penetrates through a peripheral edge portion of the lens 1 in the Z-axis direction, and the non-lens surface region 3 has the cutout structure V1 in which the boundary B1 is recessed inward with respect to the lens surface region 2 when viewed along the optical axis C1. In the lens 1 according to this Variation 1-2, the through hole H1 (non-lens surface region 3) having a substantially circular opening is provided inside the peripheral edge portion of the lens 1, which is a difference from the lens 1 according to the exemplary embodiment described above. The opening of the through hole H1 (non-lens surface region 3) does not have to be circular but may also be elliptical, for example.

In the lens 1 according to this Variation 1-2, the through hole H1 (non-lens surface region 3) is interposed between the vertex P1 and the peripheral edge portion of the lens surface region 2 on the positive side of the Y-axis as shown in FIG. 10A. When viewed in the Z-axis direction, the boundary B1 between the lens surface region 2 and the non-lens surface region 3, as well as the inner peripheral edge of the through hole H1, is circular.

The lens 1 according to this Variation 1-2 has two second lens surfaces 22 as shown in FIG. 10A. These two second lens surfaces 22 are respectively arranged adjacent to the through hole H1 (non-lens surface region 3) on the positive and negative sides of the Y-axis. These two second lens surfaces 22 each have a crescent shape and are arranged symmetrically to each other in the Y-axis direction. The two second lens surfaces 22 may be configured as, for example, the two surfaces of the common cylindrical lens surface 220 of the single plano-convex cylindrical lens 1B shown in FIG. 6B, for example. Alternatively, the two second lens surfaces 22 may also be configured as, for example, respective parts of the cylindrical lens surfaces 220 of two different plano-convex cylindrical lenses.

In the example shown in FIG. 10A, the vertex P1 of the first lens surface 21 is adjacent to the second lens surface 22 on the negative side of the Y-axis of the through hole H1 (non-lens surface region 3). However, the vertex P1 of the first lens surface 21 does not have to be adjacent to the second lens surface 22 on the negative side of the Y-axis.

In this Variation 1-2, the generatrix D1 with respect to the cylindrical lens surface 220 is also preferably offset in the Y-axis direction with respect to the vertex P1. In addition, in this Variation 1-2, the two second lens surfaces 22 are preferably configured not to include the generatrix D1 with respect to the cylindrical lens surface 220.

In this Variation 1-2, the projector 4 may also be placed inside the through hole H1 (non-lens surface region 3). In this Variation 1-2, the generatrix D1 with respect to the cylindrical lens surface 220 may also be located between the projection axis 41 and the light-receiving axis 51. In this Variation 1-2, the projection axis 41 and the light-receiving axis 51 may also be non-coaxial with each other.

In the example illustrated in FIG. 10A, two second lens surfaces 22 are provided. Alternatively, only one second lens surface 22 may be provided for the through hole H1 (non-lens surface region 3) either on the positive side or on the negative side of the Y-axis as shown in FIG. 10B. That is to say, although one second lens surface 22 is provided for the through hole H1 (non-lens surface region 3) only on the negative side of the Y-axis in the example shown in FIG. 10B, the second lens surface 22 may also be provided for the through hole H1 only on the positive side of the Y-axis.

(Variation 2)

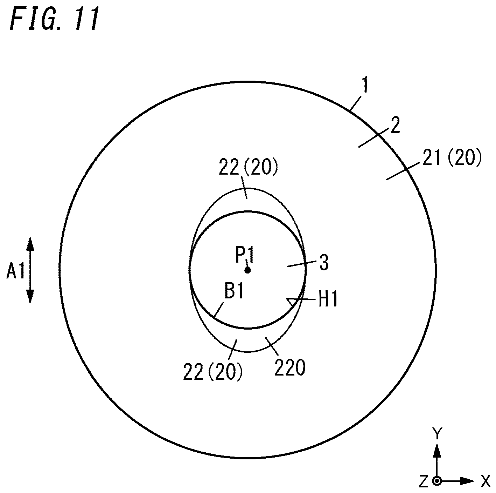

Next, a lens 1 according to this variation (Variation 2) will be described in detail with reference to FIG. 11. In the following description, any constituent element of the lens 1 according to this Variation 2, having substantially the same function as a counterpart of the lens 1 according to the exemplary embodiment described above, will be designated by the same reference numeral as that counterpart's, and description thereof will be omitted as appropriate herein. Note that FIG. 11, as well as FIG. 2, is a front view of a schematic version of the lens 1 according to Variation 2 (as viewed from the positive side of the Z-axis).

Variation 2 is a modified version of Variation 1-2. The through hole H1 (non-lens surface region 3) having a circular opening is arranged such that the center of its opening agrees with the vertex P1 of the first lens surface 21 of the lens 1 according to the exemplary embodiment. In other words, the first lens surface 21 of the lens 1 according to this Variation 2 does not include the vertex P1 according to the exemplary embodiment. Note that in FIG. 11, the vertex P1 is shown for your reference.

In this Variation 2, the generatrix D1 with respect to the cylindrical lens surface 220 substantially agrees with the vertex P1 in the Y-axis direction. In other words, according to this Variation 2, the generatrix D1 with respect to the cylindrical lens surface 220 may intersect with the light-receiving axis 51 and the optical axis C1 but may also be arranged not to intersect with the light-receiving axis 51 or the optical axis C1. In this Variation 2, the two second lens surfaces 22 are preferably configured not to include the generatrix D1 with respect to the cylindrical lens surface 220.

In this Variation 2, the projector 4 may also be placed inside the through hole H1 (non-lens surface region 3). In this Variation 2, however, the projection axis 41 and the light-receiving axis 51 may be defined to be coaxial with each other, which is a difference from the exemplary embodiment described above and Variations 1-1 and 1-2. That is to say, in this Variation 2, the projection axis 41 may be coaxial with the optical axis C1 as well. The generatrix D1 with respect to the cylindrical lens surface 220 may intersect with the projection axis 41 in this Variation 2 but may also be defined not to intersect with the projection axis 41.

(Variation 3)

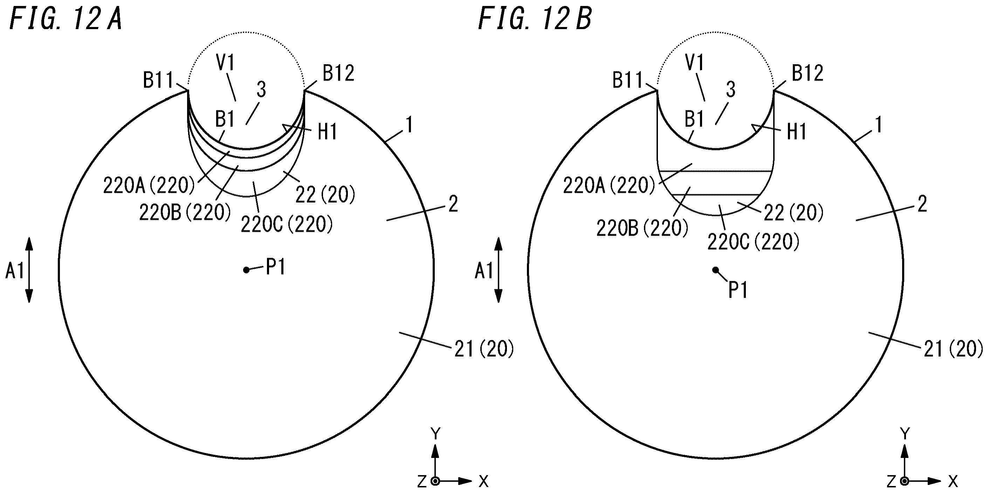

Next, a lens 1 according to this variation (Variation 3) will be described in detail with reference to FIGS. 12A and 12B. In the following description, any constituent element of the lens 1 according to this Variation 3, having substantially the same function as a counterpart of the lens 1 according to the exemplary embodiment described above, will be designated by the same reference numeral as that counterpart's, and description thereof will be omitted as appropriate herein. Note that FIG. 12A, as well as FIG. 2, is a front view of a schematic version of the lens 1 according to Variation 3 (as viewed from the positive side of the Z-axis).

The lens 1 according to this Variation 3, as well as the lens 1 according to the exemplary embodiment described above, is also provided with a through hole H1 that penetrates through a peripheral edge portion of the lens 1 in the Z-axis direction, and the non-lens surface region 3 also has the cutout structure V1 in which the boundary B1 is recessed inward with respect to the lens surface region 2 when viewed along the optical axis C1. In the lens 1 according to this Variation 3, however, the second lens surface 22 includes a plurality of cylindrical lens surfaces 220, which is a difference from the lens 1 according to the exemplary embodiment described above. In the example shown in FIG. 12A, the number of the cylindrical lens surfaces 220 provided is three.

These three cylindrical lens surfaces 220 are arranged sequentially from the boundary B1 toward the negative side of the Y-axis to be adjacent to each other. In the following description, these three cylindrical lens surfaces 220 will be hereinafter referred to as "cylindrical lens surfaces 220A, 220B, and 220C," respectively, from the boundary B1 toward the negative side of the Y-axis.

Each of the cylindrical lens surfaces 220A, 220B, and 220C may have a crescent shape, for example. Nevertheless, these cylindrical lens surfaces 220A, 220B, and 220C are defined to increase their occupied area little by little in this order with respect to the lens surface 20. The crescent cylindrical lens surfaces 220A, 220B, and 220C are formed continuously in this order. Both ends of each of these crescent cylindrical lens surfaces 220A, 220B, and 220C in the X-axis direction are located at substantially the same points as both ends B11, B12 of the arc-shaped boundary B1 in the X-axis direction.

Note that these cylindrical lens surfaces 220A, 220B, and 220C do not have to have the crescent shape. Alternatively, at least one of the cylindrical lens surfaces 220A, 220B, and 220C may also have, for example, a half-moon shape or the shape of a rectangle extending along the X-axis. For example, FIG. 12B illustrates a lens 1 according to another example of this Variation 3. As shown in FIG. 12B, the cylindrical lens surfaces 220A and 220B may each have a substantially rectangular shape to extend along the X-axis and the cylindrical lens surface 220C may have a substantially half-moon shape.

In the lens 1 according to this Variation 3, the plurality of cylindrical lens surfaces 220 have focal points at respectively different positions in the arrangement direction A1 (Y-axis direction). For example, a cylindrical lens forming the cylindrical lens surface 220A, a cylindrical lens forming the cylindrical lens surface 220B, and a cylindrical lens forming the cylindrical lens surface 220C are different from each other. That is to say, the generatrixes D1 with respect to the cylindrical lens surfaces 220A, 220B, and 220C are different from each other. In addition, the cylindrical lens surfaces 220A, 220B, and 220C are formed to have focal points at respectively different positions.

In short, in this Variation 3, the ultrashort-range lens surface F2 is subdivided. The cylindrical lens surface 220A is set as an ultrashort-range lens surface F2 for use in a situation where the distance to the object of measurement Ob1 is in the vicinity of 50 mm, for example. The cylindrical lens surface 220B is set as an ultrashort-range lens surface F2 for use in a situation where the distance to the object of measurement Ob1 is in the vicinity of 100 mm, for example. The cylindrical lens surface 220C is set as an ultrashort-range lens surface F2 for use in a situation where the distance to the object of measurement Ob1 is in the vicinity of 150 mm, for example. That is to say, in this variation, the closer to the non-lens surface region 3 a given cylindrical lens surface 220 is located, the shorter the distance to the object of measurement Ob1 the reflected light Op2 to be condensed by the cylindrical lens surface 220 comes from.

The configuration according to this Variation 3 may more accurately condense incident light which has come from a distance falling within a broader range.

(Variation 4)

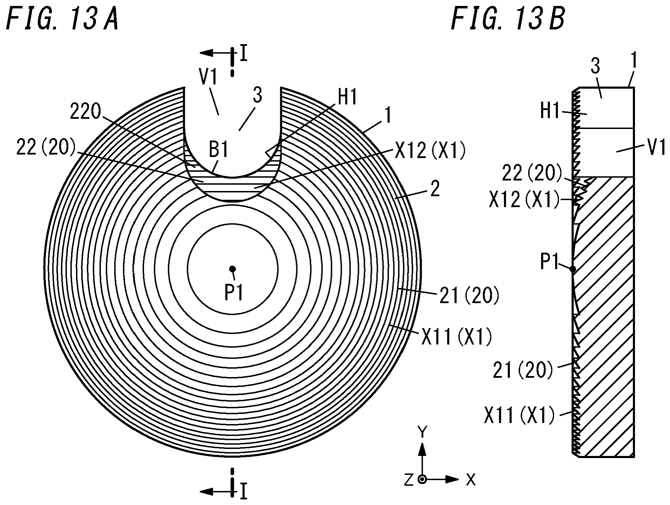

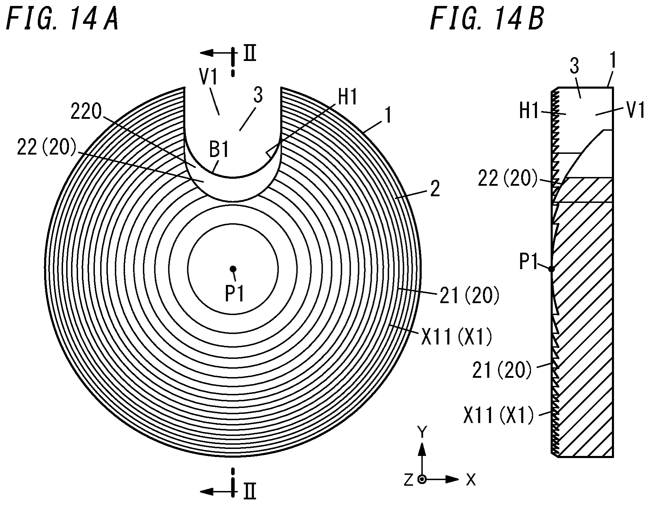

Next, a lens 1 according to this variation (Variation 4) will be described in detail with reference to FIGS. 13A, 13B, 14A, and 14B. In the following description, any constituent element of the lens 1 according to this Variation 4, having substantially the same function as a counterpart of the lens 1 according to the exemplary embodiment described above, will be designated by the same reference numeral as that counterpart's, and description thereof will be omitted as appropriate herein. Note that FIGS. 13A and 14A, as well as FIG. 2, are front views of a schematic version of the lens 1 according to Variation 4 (as viewed from the positive side of the Z-axis). FIG. 13B is a cross-sectional view taken along the plane I-I shown in FIG. 13A. FIG. 14B is a cross-sectional view taken along the plane II-II shown in FIG. 14A.

In the lens 1 according to this Variation 4, at least one of the first lens surface 21 or the second lens surface 22 has a Fresnel structure X1, which is a difference from the lens 1 according to the exemplary embodiment described above. Note that in this Variation 4, the non-lens surface region 3 has a cutout structure V1 in which when viewed along the optical axis C1, the boundary B1 is recessed more deeply inside toward the lens surface region 2 (i.e., toward the negative side of the Y-axis) than the cutout structure V1 according to the exemplary embodiment (refer to FIG. 2) described above.

In the lens 1 shown in FIG. 13A according to an implementation of this Variation 4, the first lens surface 21 and the second lens surface 22 have a first Fresnel structure X11 (X1) and a second Fresnel structure X12, respectively.

Specifically, the first lens surface 21 has the first Fresnel structure X11 in which the first lens surface 21 is divided into a plurality of substantially concentric regions as in a so-called "Fresnel lens" and has a saw-tooth cross section as shown in FIGS. 13A and 13B. The second lens surface 22 also has the second Fresnel structure X12 in which the second lens surface 22 is divided into a plurality of substantially concentric regions as in a Fresnel lens and has a saw-tooth cross section as shown in FIGS. 13A and 13B.

Meanwhile, in a lens 1 shown in FIG. 14A according to another implementation of this Variation 4, only one of the first lens surface 21 or the second lens surface 22, namely, the first lens surface 21, has the Fresnel structure X1 (first Fresnel structure X11). Alternatively, only the second lens surface 22 may have the Fresnel structure X1 out of the first lens surface 21 and the second lens surface 22.

As can be seen, in the configuration according to this Variation 4, at least one of the first lens surface 21 or the second lens surface 22 has the Fresnel structure X1, thus making it easier to reduce the lens thickness of the lens 1 and contributing to cutting down the material cost of the lens 1.

(Variation 5)

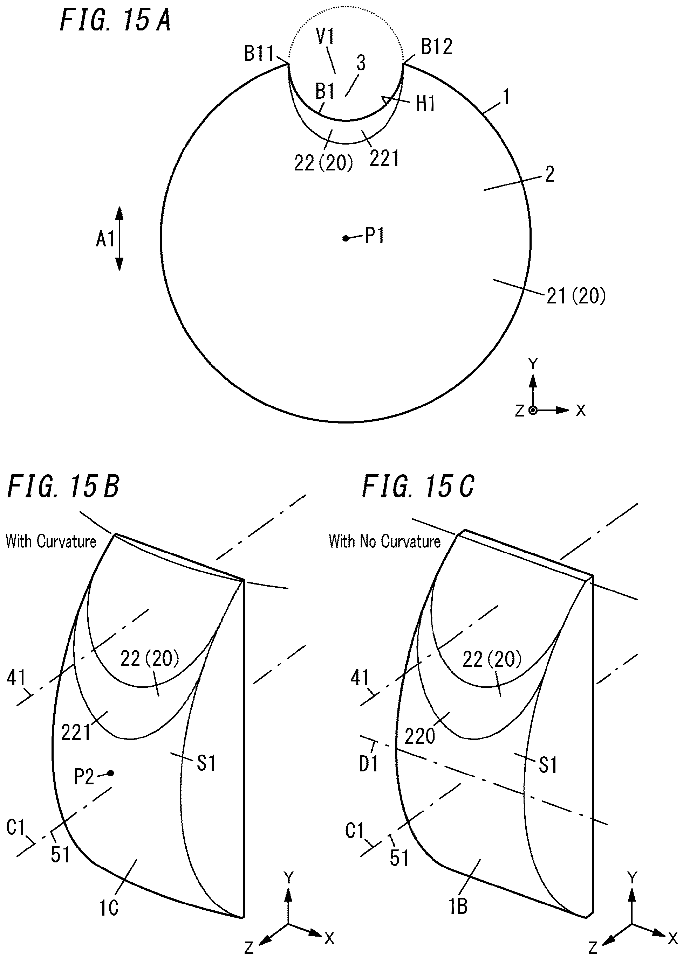

Next, a lens 1 according to this variation (Variation 5) will be described in detail with reference to FIGS. 15A, 15B, and 15C. In the following description, any constituent element of the lens 1 according to this Variation 5, having substantially the same function as a counterpart of the lens 1 according to the exemplary embodiment described above, will be designated by the same reference numeral as that counterpart's, and description thereof will be omitted as appropriate herein. Note that FIG. 15A, as well as FIG. 2, is a front view of a schematic version of the lens 1 according to Variation 5 (as viewed from the positive side of the Z-axis).

In the lens 1 according to this Variation 5, the second lens surface 22 includes a toroidal lens surface 221 (refer to FIG. 15A), which is a difference from the lens 1 according to the exemplary embodiment. With this regard, FIG. 15B illustrates a plano-convex toroidal lens 1C having an aspheric surface S1 (toroidal lens surface 221). The lens 1 includes, as the second lens surface 22, a part of the aspheric surface S1 (toroidal lens surface 221) of the plano-convex toroidal lens 1C shown in FIG. 15B. In the toroidal lens 1C, the curvature of a cross section thereof taken along a Y-Z plane and the curvature of another cross section thereof taken along an X-Z plane (refer to the part labeled as "with curvature" in FIG. 15B), for example, are different from each other. In FIG. 15B, a region, applicable as the second lens surface 22, of the toroidal lens surface 221 of the toroidal lens 1C is illustrated. In addition, in FIG. 15B, the projection axis 41 and the light-receiving axis 51 are shown for your reference to indicate where the projection axis 41 and the light-receiving axis 51 are located with respect to the toroidal lens surface 221 and the vertex P2 of the toroidal lens surface 221 when the lens 1 according to this Variation 5 is applied to the TOF sensor 200.

The second lens surface 22 (toroidal lens surface 221), as well as the second lens surface 22 (cylindrical lens surface 220) according to the exemplary embodiment, may have a crescent shape, for example, to reduce the area occupied by the second lens surface 22. The relative position of the second lens surface 22 (toroidal lens surface 221) with respect to the non-lens surface region 3 and the first lens surface 21 is generally the same as that of the second lens surface 22 (cylindrical lens surface 220) according to the exemplary embodiment described above.

In this Variation 5, the vertex P2 of the toroidal lens surface 221 is preferably set to be shifted from the vertex P1 (refer to FIGS. 1 and 2) in the Y-axis direction. The vertex P2 of the toroidal lens surface 221 may be set between the projection axis 41 and the light-receiving axis 51 as shown in FIG. 15B. In this Variation 5, the second lens surface 22 is preferably configured not to include the vertex P2 of the toroidal lens surface 221.

FIG. 15C illustrates the cylindrical lens 1B to make it easier to compare the cylindrical lens 1B with the toroidal lens 1C. In the cylindrical lens 1B, a cross section thereof taken along an X-Z plane has no curvature as shown in FIG. 15C.

As can be seen, in the configuration according to this Variation 5, the second lens surface 22 includes the toroidal lens surface 221, thus making it easier to realize a second lens surface 22 that may condense the incident light even more accurately.

Note that the second lens surface 22 is not limited to the cylindrical lens surface 220 and the toroidal lens surface 221 but may also include an anamorphic aspheric surface or include an xy polynomial plane.

(Variation 6)

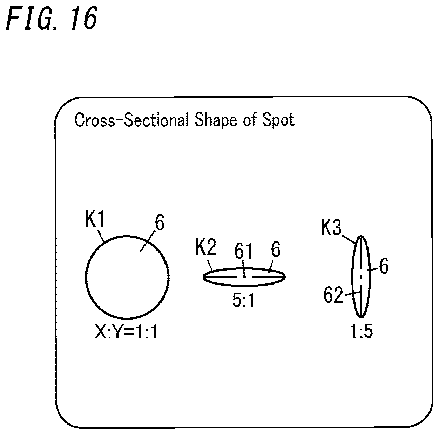

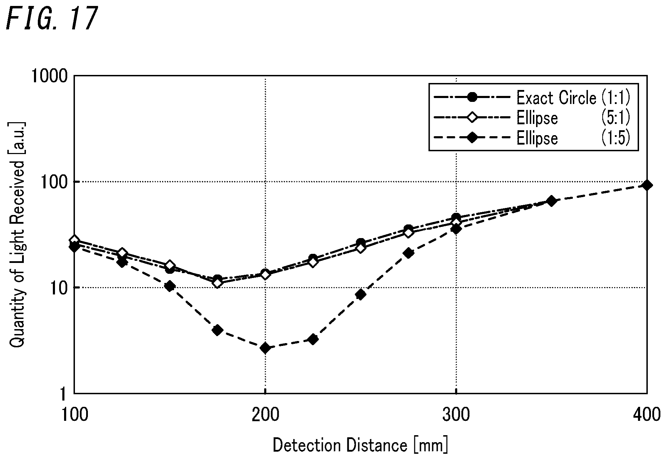

A projector 4 of an optical sensor system 100 (TOF sensor 200) according to this variation (Variation 6) will be described with reference to FIGS. 16 and 17. In the following description, any constituent element of the optical sensor system 100 according to this Variation 6, having the same function as a counterpart of the optical sensor system 100 according to the embodiment described above, will be designated by the same reference numeral as that counterpart's, and description thereof will be omitted as appropriate herein.

In the optical sensor system 100 according to the exemplary embodiment described above, a cross section of a projected beam spot formed by the laser beam Op1 projected from the projector 4 on a plane (i.e., an X-Y plane) which intersects with the projection axis 41 at right angles has an exact circle shape. In the optical sensor system 100 according to this Variation 6, a cross section K2 (refer to FIG. 16) of a projected beam spot 6 formed by the laser beam Op1 projected from the projector 4 on a plane which intersects with the projection axis 41 at right angles has the shape of an ellipse having a major axis 61, which is a difference from the optical sensor system 100 according to the exemplary embodiment described above. The major axis 61 is aligned with a direction (i.e., the X-axis direction) which intersects at right angles with each of the arrangement direction A1 in which the non-lens surface region 3, the second lens surface 22, and the first lens surface 21 are arranged one on top of another and the direction of the projection axis 41. The beam that forms the projected beam spot 6 having the shape of an ellipse with the major axis 61 aligned with the X-axis direction and the beam that forms the projected beam spot 6 having the shape of an exact circle may be shaped using an optical system such as an optical filter.

The present inventors carried out an inspection to verify the effect to be achieved by having the projector 4 project the laser beam Op1, forming a projected beam spot 6 having the shape of an ellipse with the major axis 61 aligned with the X-axis direction, when the lens 1 was used as the light-receiving lens 7.

FIG. 16 is a conceptual diagram illustrating a cross section K1 of a projected beam spot 6 formed by the optical sensor system 100 according to the exemplary embodiment described above, a cross section K2 of projected beam spot 6 formed by the optical sensor system 100 according to this Variation 6, and a cross section K3 of a projected beam spot 6 as a comparative example.

The cross section K1 shown in FIG. 16 has an exact circle shape. For example, the cross section K1 of a projected beam spot 6 formed at a predetermined distance from the projector 4 may have a size ratio of one to one with respect to the X-axis and the Y-axis, respectively.

The cross section K2 shown in FIG. 16 is a cross section of the projected beam spot 6 formed by the optical sensor system 100 according to this Variation 6 and has the shape of an ellipse having the major axis 61 aligned with the X-axis direction. For example, the cross section K2 of a projected beam spot 6 formed at the predetermined distance from the projector 4 may have a size ratio of five to one with respect to the X-axis and the Y-axis, respectively.

The cross section K3 shown in FIG. 16 has the shape of an ellipse having a major axis 62 aligned with the Y-axis direction. For example, the cross section K3 of a projected beam spot 6 formed at the predetermined distance from the projector 4 may have a size ratio of one to five with respect to the X-axis and the Y-axis, respectively.

The inventors of the present application carried out a simulation by projecting the laser beams Op1, which formed projected beam spots 6 with the cross sections K1-K3, respectively, perpendicularly to the surface (plane) of a workpiece that was provided for inspection purposes, for example. The results of simulation on the quantity of the reflected light Op2 received at the photosensitive element 5 after having been reflected from the surface of the workpiece are shown in FIG. 17.

In FIG. 17, the abscissa indicates the detection distance [mm] measured from the projector 4 to the surface of the workpiece and the ordinate indicates the quantity of light received [in an arbitrary unit (a. u.)] at the photosensitive element 5 with respect to the detection distance. Note that FIG. 17 is a semilogarithmic graph, of which the axis of ordinates is a logarithmic scale. FIG. 17 shows the characteristics of the quantity of light received with respect to a detection distance (abscissa) falling within the range from 100 mm to 400 mm.

The exact circle (1.1) shown in the upper right column of FIG. 17 corresponds to the projected beam spot 6 with the cross section K1. The ellipse (5.1) shown in the upper right column of FIG. 17 corresponds to the projected beam spot 6 with the cross section K2. The ellipse (1.5) shown in the upper right column of FIG. 17 corresponds to the projected beam spot 6 with the cross section K3.

As can be seen from FIG. 17, at a distance scale falling within a local range from 100 mm to 400 mm, the cross section K1 corresponding to the exact circle (1.1) and the cross section K2 corresponding to the ellipse (5.1) produced better results than the cross section K3 corresponding to the ellipse (1.5).

As can be seen, the configuration of this Variation 6 makes it easier for the second lens surface 22 of the lens 1 to condense the reflected light Op2 corresponding to the elliptical projected beam spot 6 having the major axis 61. As a result, the quantity of light received at the photosensitive element 5 may increase. Particularly, forming a projected beam spot 6, of which a cross-sectional shape is similar to the shape of the crescent second lens surface 22 which is elongate in the X-axis direction, allows the optical sensor system 100 to achieve a good quantity of light received in the vicinity of a near point of 200 mm.

(Variation 7)

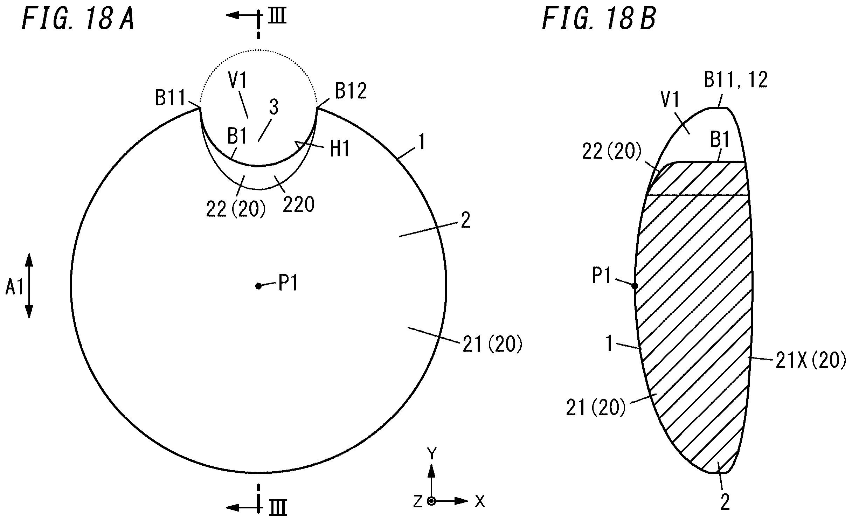

Next, a lens 1 according to this variation (Variation 7) will be described in detail with reference to FIGS. 18A and 18B. In the following description, any constituent element of the lens 1 according to this Variation 7, having substantially the same function as a counterpart of the lens 1 according to the exemplary embodiment described above, will be designated by the same reference numeral as that counterpart's, and description thereof will be omitted as appropriate herein. Note that FIG. 18A, as well as FIG. 2, is a front view of a schematic version of the lens 1 according to Variation 7 (as viewed from the positive side of the Z-axis). FIG. 18B is a cross-sectional view taken along the plane III-III shown in FIG. 18A.

The lens 1 according to this Variation 7 is configured as a biconvex lens, which is a difference from the lens 1 according to the exemplary embodiment described above.

The lens 1 shown in FIGS. 18A and 18B according to an implementation of this Variation 7 is configured as a biconvex lens, and therefore, has a third lens surface 21X (refer to FIG. 18B) which has a curvature on the light emerging surface of the lens 1 (i.e., on the negative side of the Z-axis). That is to say, the third lens surface 21X is a lens surface opposite from the first lens surface 21. Note that the curvatures of the third lens surface 21X and the first lens surface 21 may be equal to each other or different from each other, whichever is appropriate. In the example shown in FIG. 18B, the curvatures of the third lens surface 21X and the first lens surface 21 are different from each other.

The lens 1 according to this Variation 7 allows the curvature to be covered by the first lens surface 21 to be partially covered by the second lens surface as well, thus allowing the curvature of the first lens surface 21 to be set at a smaller value than in a plano-convex lens such as the lens 1 according to exemplary embodiment described above. Consequently, this allows for increasing the AR efficiency when the surface of the lens 1 is coated with an antireflective coating such as an AR coating.

(Variation 8)

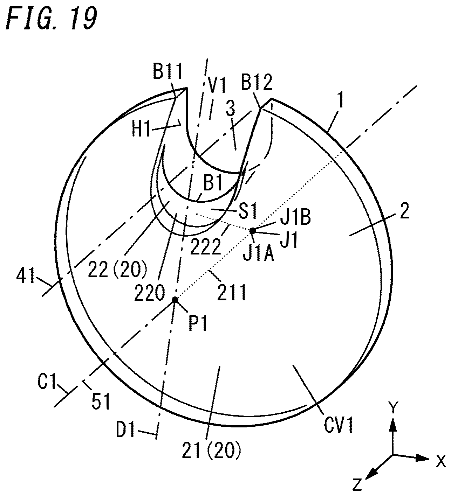

Next, a lens 1 according to this variation (Variation 8) will be described in detail with reference to FIGS. 19-22. In the following description, any constituent element of the lens 1 according to this Variation 8, having substantially the same function as a counterpart of the lens 1 according to the exemplary embodiment described above, will be designated by the same reference numeral as that counterpart's, and description thereof will be omitted as appropriate herein. Note that FIG. 19, as well as FIG. 1, is a perspective view illustrating the appearance of a schematic version of the lens 1 according to Variation 8 (as viewed from in front of the lens 1).

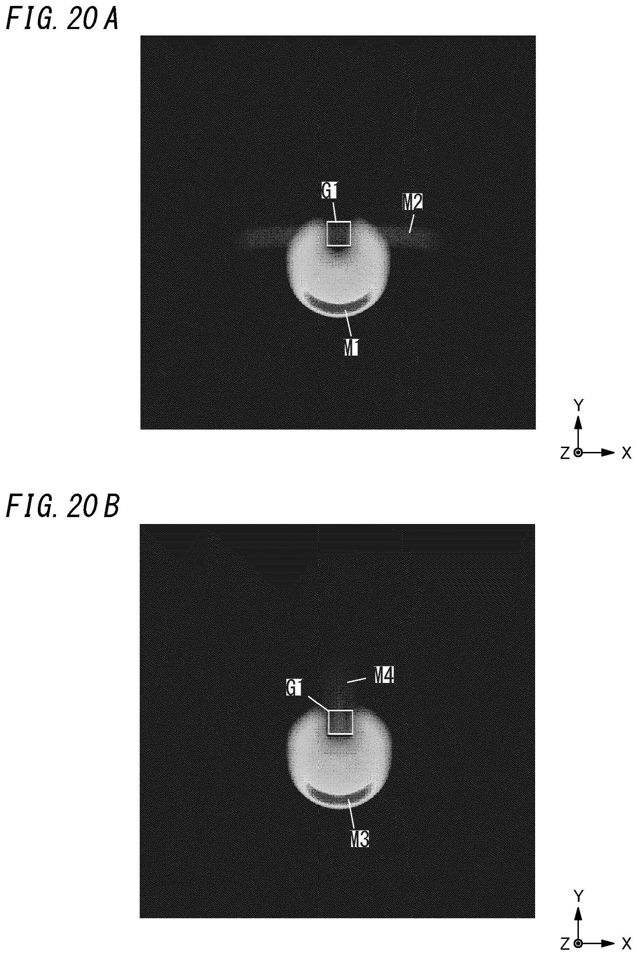

FIG. 20A is a characteristic diagram showing a light intensity distribution of light, which has been transmitted through the lens 1 according to the exemplary embodiment (i.e., the lens 1 shown in FIG. 1) at an arbitrary distance, on a photosensitive plane of the photosensitive element 5 (indicated by the square frame G1) and surroundings thereof. FIG. 20B is a characteristic diagram showing a light intensity distribution of light, which has been transmitted through the lens 1 according to this variation (i.e., Variation 8), on the photosensitive plane of the photosensitive element 5 (indicated by the square frame G1) and surroundings thereof. Note that FIGS. 20A and 20B each show the light intensity distribution in gray scales.

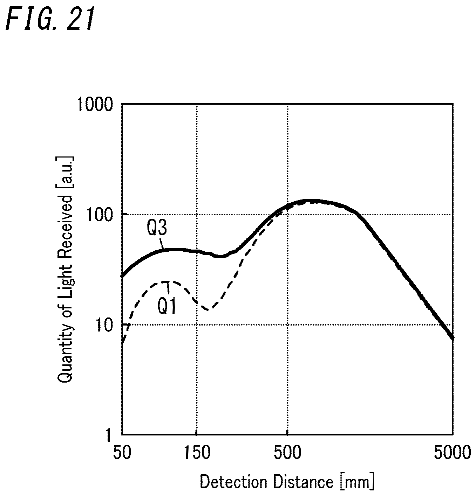

FIG. 21 shows the distance measurement characteristics (results of simulation) obtained when the lens 1 according to the exemplary embodiment and the lens 1 according to this variation (Variation 8) were used. FIG. 21, as well as FIG. 7, is a double logarithmic graph, of which the abscissa indicates the detection distance, and the ordinate indicates the quantity of light received. In FIG. 21, the curve Q1 represents the distance measurement characteristic Q1 obtained when the lens 1 according to the exemplary embodiment was used. The distance measurement characteristic Q1 is the same as the distance measurement characteristic Q1 shown in FIG. 7. On the other hand, the curve Q3 shown in FIG. 21 represents the distance measurement characteristic that was obtained when the lens 1 according to this Variation 8 was used.

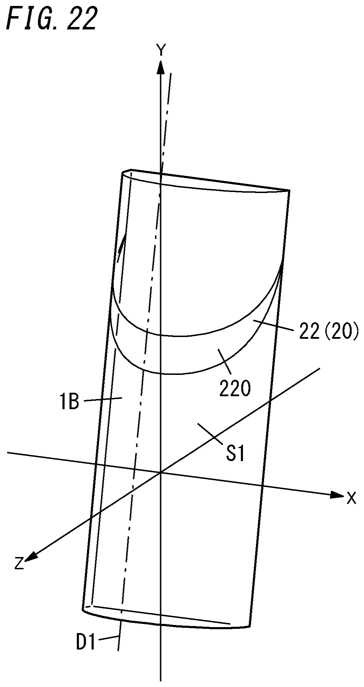

FIG. 22 illustrates a plano-convex cylindrical lens 1B having an aspheric surface S1 (cylindrical lens surface 220). The lens 1 according to this variation (Variation 8) has, as the second lens surface 22, a part of the aspheric surface S1 of the plano-convex cylindrical lens 1B shown in FIG. 22 (i.e., the cylindrical lens surface 220). In FIG. 22, a region of the cylindrical lens surface 220, used as the second lens surface 22, of the cylindrical lens 1B is indicated for your reference.

In the lens 1 according to this Variation 8, if the origin of the XYZ coordinate system is set such that the generatrix direction aligned with the generatrix D1 with respect to the cylindrical lens surface 220 intersects with the Z-axis (refer to FIG. 22), then the generatrix direction aligned with the generatrix D1 intersects with the Y-axis and the generatrix D1 appears on the surface of the second lens surface 22 as shown in FIGS. 19 and 22, which is a difference from the lens 1 according to the exemplary embodiment described above.

Specifically, the lens 1 according to this Variation 8 includes the cylindrical lens surface 220. The generatrix direction aligned with the generatrix D1 with respect to the cylindrical lens surface 220 is (substantially) parallel to the arrangement direction A1 in which the non-lens surface region 3, the second lens surface 22, and the first lens surface 21 are arranged one on top of another (i.e., the Y-axis direction) when viewed along the optical axis C1 passing through the vertex P1. In addition, the second lens surface 22 of the lens 1 according to Variation 8 is configured to include the generatrix D1 with respect to the cylindrical lens surface 220 (i.e., a part of the generatrix D1 with respect to the cylindrical lens 1B in FIG. 22).

As shown in FIG. 20A, in the lens 1 according to the exemplary embodiment, the intensity distribution of the light transmitted through the second lens surface 22 (i.e., the cylindrical lens surface 220) manifests itself as a horizontally elongate intensity distribution extending in the X-axis direction with respect to the photosensitive plane. Note that in FIG. 20A, the reference sign "M1" denotes a spot image derived from the first lens surface 21 of the lens 1 according to the exemplary embodiment and the reference sign "M2" denotes a spot image derived from the second lens surface 22 of the lens 1 according to the exemplary embodiment.

On the other hand, as shown in FIG. 20B, in the lens 1 according to this Variation 8, the intensity distribution of the light transmitted through the second lens surface 22 (i.e., the cylindrical lens surface 220) manifests itself as a vertically elongate intensity distribution extending in the Y-axis direction with respect to the photosensitive plane. Note that in FIG. 20B, the reference sign "M3" denotes a spot image derived from the first lens surface 21 of the lens 1 according to Variation 8 and the reference sign "M4" denotes a spot image derived from the second lens surface 22 of the lens 1 according to Variation 8.

In the lens 1 according to the exemplary embodiment, the generatrix D1 with respect to the cylindrical lens surface 220 is parallel to the X-axis direction, and therefore, the light intensity distribution manifesting itself as a horizontally elongate intensity distribution is movable up and down (i.e., toward either the positive side or the negative side of the Y-axis) with respect to the photosensitive plane as the detection distance varies.

On the other hand, in the lens 1 according to this Variation 8, the generatrix D1 with respect to the cylindrical lens surface 220 is parallel to the arrangement direction A1 (Y-axis direction) and is not parallel to the X-axis direction, and therefore, the light intensity distribution manifesting itself as a vertically elongate intensity distribution continues to stay on the photosensitive plane irrespective of the variation in detection distance. That is to say, in the lens 1 according to Variation 8, the light intensity distribution varies to a lesser degree according to the distance. In addition, in the lens 1 according to Variation 8, the quantity of light received varies to a lesser degree as indicated by the distance measurement characteristic Q3 shown in FIG. 21 than the distance measurement characteristic Q1 and comes to be expressed by a broader waveform than in the case of the distance measurement characteristic Q1. This allows the lens 1 according to Variation 8 to be designed to have a constant distance measurement characteristic irrespective of the detection distance.

(Recapitulation)

The exemplary embodiment and its variations described above are specific implementations of the following aspects of the present disclosure.

A lens (1) according to a first aspect includes: a lens surface region (2) having a lens surface (20) that condenses incident light (such as reflected light Op2); and a non-lens surface region (3) in which the lens surface (20) is nonexistent. The lens surface (20) includes: a first lens surface (21) that is a convex lens surface and is configured as a convex curved surface (CV1) having a vertex (P1); and a second lens surface (22) that is an aspheric surface and has a different curvature from the first lens surface (21). An axis (222) of a principal ray defined with respect to the second lens surface (22) is non-coaxial with an axis (211) of a principal ray defined with respect to the first lens surface (21).

This aspect achieves the advantage of contributing to condensing incident light more accurately even if the incident light has traveled a distance falling within a broader range before being incident on the lens (1).

In a lens (1) according to a second aspect, which may be implemented in conjunction with the first aspect, the second lens surface (22) is interposed between the first lens surface (21) and the non-lens surface region (3) to extend along at least a part of a boundary (B1) between the lens surface region (2) and the non-lens surface region (3) when viewed along an optical axis (C1) passing through the vertex (P1).

This aspect allows incident light to be condensed even more accurately even if the incident light has traveled a distance falling within a broader range before being incident on the lens (1).

In a lens (1) according to a third aspect, which may be implemented in conjunction with the first or second aspect, the second lens surface (22) includes a cylindrical lens surface (220). A generatrix direction aligned with a generatrix (D1) with respect to the cylindrical lens surface

(220) intersects with an arrangement direction (A1) in which the non-lens surface region (3), the second lens surface (22), and the first lens surface (21) are arranged one on top of another when viewed along an optical axis (C1) passing through the vertex (P1).

This aspect makes it easier to realize a second lens surface (22) that allows the incident light to be condensed more accurately.

In a lens (1) according to a fourth aspect, which may be implemented in conjunction with the third aspect, the second lens surface (22) is configured not to include the generatrix (D1) with respect to the cylindrical lens surface (220).

This aspect makes it easier to realize a second lens surface (22) that allows the incident light to be condensed more accurately than in a situation where the second lens surface (22) includes the generatrix (D1).

In a lens (1) according to a fifth aspect, which may be implemented in conjunction with the third or fourth aspect, the second lens surface (22) includes a plurality of the cylindrical lens surfaces (220), and the plurality of the cylindrical lens surfaces (220) have focal points at mutually different positions in the arrangement direction (A1).

This aspect allows incident light to be condensed more accurately even if the incident light has traveled a distance falling within a broader range.

In a lens (1) according to a sixth aspect, which may be implemented in conjunction with any one of the first to fifth aspects, the second lens surface (22) is arranged to be adjacent to the non-lens surface region (3).

This aspect allows the incident light to be condensed more accurately.

In a lens (1) according to a seventh aspect, which may be implemented in conjunction with any one of the first to sixth aspects, the non-lens surface region (3) has a cutout structure (V1) in which a boundary (B1) between the lens surface region (2) and the non-lens surface region (3) is recessed inward with respect to the lens surface region (2) when viewed along an optical axis (C1) passing through the vertex (P1).

This aspect contributes to increasing the quantity of the reflected light (OP2) received by placing the projector (4) and other members in the non-lens surface region (3).

In a lens (1) according to an eighth aspect, which may be implemented in conjunction with any one of the first to seventh aspects, the second lens surface (22) is formed in a shape of a crescent that extends along at least a part of a boundary (B1) between the lens surface region (2) and the non-lens surface region (3) when viewed along an optical axis (C1) passing through the vertex (P1).

This aspect makes it easier to reduce the area, occupied by the second lens surface (22), of the lens surface (20).

In a lens (1) according to a ninth aspect, which may be implemented in conjunction with any one of the first to eighth aspects, at least one of the first lens surface (21) or the second lens surface (22) has a Fresnel structure (X1).

This aspect contributes to not only reducing the thickness of the lens (1) more effectively but also cutting down the material cost of the lens (1).

In a lens (1) according to a tenth aspect, which may be implemented in conjunction with any one of the first to ninth aspects, the second lens surface (22) includes a toroidal lens surface

(221). The second lens surface (22) is configured not to include a vertex (P2) of the toroidal lens surface (221).

This aspect makes it easier to realize a second lens surface (22) that allows the incident light to be condensed more accurately than in a situation where the second lens surface (22) includes the vertex (P2).

In a lens (1) according to an eleventh aspect, which may be implemented in conjunction with the first or second aspect, the second lens surface (22) includes a cylindrical lens surface

(220). A generatrix direction aligned with a generatrix (D1) with respect to the cylindrical lens surface (220) is (substantially) parallel to an arrangement direction (A1) in which the non-lens surface region (3), the second lens surface (22), and the first lens surface (21) are arranged one on top of another when viewed along an optical axis (C1) passing through the vertex (P1). The second lens surface (22) is configured to include the generatrix (D1) with respect to the cylindrical lens surface (220).

According to this aspect, part of the light transmitted through the second lens surface (22) continues to reach an image point (J1) irrespective of the detection distance, thus enabling a design that makes the distance measurement characteristic nearly constant irrespective of the detection distance.

In a lens (1) according to a twelfth aspect, which may be implemented in conjunction with any one of the first to eleventh aspects, the lens (1) is configured as a biconvex lens and further has a third lens surface (21X), of which a light emerging surface has a curvature.

This aspect allows the first lens surface (21) to be designed to have a smaller curvature, thus allowing for increasing the efficiency of an antireflective film provided as a coating that covers the surface of the lens (1).

An optical sensor system (100) according to a thirteenth aspect includes a projector (4), the lens (1) according to any one of the first to twelfth aspects, and a photosensitive element (5). The projector (4) projects a laser beam (Op1) toward an object of measurement (Ob1). The lens (1) condenses reflected light (Op2) coming from the object of measurement (Ob1). The photosensitive element (5) receives the light condensed by the lens (1) and transduces the light into an electrical signal. The photosensitive element (5) is arranged to align a light-receiving axis (51) of the photosensitive element (5) with an optical axis (C1) passing through the vertex (P1). A projection axis (41) of the projector (4) and the light-receiving axis (51) are parallel to each other with respect to the optical axis (C1).

This aspect achieves the advantage of providing an optical sensor system (100) including a lens (1) contributing to condensing incident light more accurately even if the incident light has traveled a distance falling within a broader range before being incident on the lens (1).

In an optical sensor system (100) according to a fourteenth aspect, which may be implemented in conjunction with the thirteenth aspect, the first lens surface (21) is a long-range lens surface as for a distance to the object of measurement (Ob1). The second lens surface (22) is a short-range lens surface as for the distance to the object of measurement (Ob1).

This aspect allows, if the distance to the object of measurement (Ob1) is a "long range," the incident light to be condensed onto the first lens surface (21) more accurately. This aspect also allows, if the distance to the object of measurement (Ob1) is a "short range," the incident light to be condensed onto the second lens surface (22) more accurately. Consequently, the quantity of light received by the photosensitive element (5) may increase.

In an optical sensor system (100) according to a fifteenth aspect, which may be implemented in conjunction with the thirteenth or fourteenth aspect, the projector (4) is placed inside the non-lens surface region (3).

According to this aspect, the projection axis (41) and the light-receiving axis (51) are located closer to each other, thus allowing the lens (1) to condense the incident light even more accurately. Consequently, the quantity of light received at the photosensitive element (5) may increase.

In an optical sensor system (100) according to a sixteenth aspect, which may be implemented in conjunction with any one of the thirteenth to fifteenth aspects, the second lens surface (22) includes either a cylindrical lens surface (220) or a toroidal lens surface (221). Either a generatrix (D1) with respect to the cylindrical lens surface (220) or a vertex (P2) of the toroidal lens surface (221) is interposed between the projection axis (41) and the light-receiving axis (51).

According to this aspect, stated otherwise, the second lens surface (22) is arranged to be offset with respect to the vertex (P1) of the first lens surface (21), thus allowing the lens (1) to condense the incident light even more accurately. Consequently, the quantity of light received at the photosensitive element (5) may increase.

In an optical sensor system (100) according to a seventeenth aspect, which may be implemented in conjunction with any one of the thirteenth to sixteenth aspects, the projection axis (41) and the light-receiving axis (51) are arranged to be non-coaxial with each other.

This aspect allows the lens (1) to condense the incident light more accurately than in a situation where the projection axis (41) and the light-receiving axis (51) are arranged to be coaxial with each other. Consequently, the quantity of light received at the photosensitive element (5) may increase.

In an optical sensor system (100) according to an eighteenth aspect, which may be implemented in conjunction with any one of the thirteenth to seventeenth aspects, a projected beam spot (6), formed, by the laser beam (Op1) projected from the projector (4), on a plane intersecting at right angles with the projection axis (41), has a cross section in a shape of an ellipse with a major axis (61). The major axis (61) is aligned with a direction perpendicular to each of the arrangement direction (A1) in which the non-lens surface region (3), the second lens surface (22), and the first lens surface (21) are arranged one on top of another and a direction in which the projection axis (41) extends.

This aspect makes it easier to have the reflected light (Op2) corresponding to the elliptical projected beam spot (6) having the major axis (61) condensed onto the second lens surface (22) of the lens (1). Consequently, the quantity of light received at the photosensitive element (5) may increase.

Note that the constituent elements according to the second to twelfth aspects are not essential constituent elements for the lens (1) but may be omitted as appropriate. It should also be noted that the constituent elements according to the fourteenth to eighteenth aspects are not essential constituent elements for the optical sensor system (100) but may be omitted as appropriate.

**Reference Signs List**

| 1 | Lens |
|---|---|
| 2 | Lens Surface Region |
| 20 | Lens Surface |
| 21 | First Lens Surface |
| 211 | Axis of Principal Ray |
| 22 | Second Lens Surface |
| 220 | Cylindrical Lens Surface |
| 221 | Toroidal Lens Surface |
| 222 | Axis of Principal Ray |

| | | |
|---|---|---|
| 3 | Non-Lens Surface Region | |
| 4 | Projector | |
| 41 | Projection Axis | |
| 5 | Photosensitive Element | |
| 51 | Light-receiving Axis | |
| 6 | Projected Beam Spot | |
| 61 | Major Axis | |
| 100 | Optical Sensor System | |
| A1 | Arrangement Direction | |
| B1 | Boundary | |
| C1 | Optical Axis | |
| Cv1 | Convex Curved Surface | |
| D1 | Generatrix (of Cylindrical Lens Surface) | |
| Ob1 | Object of Measurement | |
| Op1 | Laser Beam | |
| Op2 | Reflected Light | |
| P1 | Vertex | |
| P2 | Vertex (of Toroidal Lens Surface) | |
| V1 | Cutout Structure | |
| X1 | Fresnel Structure | |

**Claims**

1. A lens comprising: a lens surface region having a lens surface configured to condense incident light; and a non-lens surface region in which the lens surface is nonexistent,
   the lens surface including:

   a first lens surface that is a convex lens surface, the first lens surface being configured as a convex curved surface having a vertex; and
   a second lens surface that is an aspheric surface, the second lens surface having a different curvature from the first lens surface,
   an axis of a principal ray defined with respect to the second lens surface being non-coaxial with an axis of a principal ray defined with respect to the first lens surface.

2. The lens of claim 1, wherein
   the second lens surface is interposed between the first lens surface and the non-lens surface region to extend along at least a part of a boundary between the lens surface region and the non-lens surface region when viewed along an optical axis passing through the vertex.

3. The lens of claim 1 or 2, wherein

   the second lens surface includes a cylindrical lens surface, and
   a generatrix direction aligned with a generatrix with respect to the cylindrical lens surface intersects with an arrangement direction in which the non-lens surface region, the second lens surface, and the first lens surface are arranged one on top of another when viewed along an optical axis passing through the vertex.

4. The lens of claim 3, wherein
   the second lens surface is configured not to include the generatrix with respect to the cylindrical lens surface.

5. The lens of claim 3 or 4, wherein

   the second lens surface includes a plurality of the cylindrical lens surfaces, and
   the plurality of the cylindrical lens surfaces have focal points at mutually different positions in the arrangement direction.

6. The lens of any one of claims 1 to 5, wherein
   the second lens surface is arranged to be adjacent to the non-lens surface region.

**7.** The lens of any one of claims 1 to 6, wherein
the non-lens surface region has a cutout structure in which a boundary between the lens surface region and the non-lens surface region is recessed inward with respect to the lens surface region when viewed along an optical axis passing through the vertex.

**8.** The lens of any one of claims 1 to 7, wherein
the second lens surface has a shape of a crescent that extends along at least a part of a boundary between the lens surface region and the non-lens surface region when viewed along an optical axis passing through the vertex.

**9.** The lens of any one of claims 1 to 8, wherein
at least one of the first lens surface or the second lens surface has a Fresnel structure.

**10.** The lens of any one of claims 1 to 9, wherein

the second lens surface includes a toroidal lens surface, and
the second lens surface is configured not to include a vertex of the toroidal lens surface.

**11.** The lens of claim 1 or 2, wherein

the second lens surface includes a cylindrical lens surface,
a generatrix direction aligned with a generatrix with respect to the cylindrical lens surface is parallel to an arrangement direction in which the non-lens surface region, the second lens surface, and the first lens surface are arranged one on top of another when viewed along an optical axis passing through the vertex, and
the second lens surface is configured to include the generatrix with respect to the cylindrical lens surface.

**12.** An optical sensor system comprising

a projector configured to project a laser beam toward an object of measurement;
the lens of any one of claims 1 to 11, the lens being configured to condense reflected light coming from the object of measurement; and
a photosensitive element configured to receive the light condensed by the lens and transduce the light into an electrical signal,
the photosensitive element being arranged to align a light-receiving axis of the photosensitive element with the optical axis passing through the vertex, and
a projection axis of the projector and the light-receiving axis are parallel to each other with respect to the optical axis.

**13.** The optical sensor system of claim 12, wherein

the first lens surface is a long-range lens surface as for a distance to the object of measurement, and
the second lens surface is a short-range lens surface as for the distance to the object of measurement.

**14.** The optical sensor system of claim 12 or 13, wherein
the projector is placed inside the non-lens surface region.

**15.** The optical sensor system of any one of claims 12 to 14, wherein

the second lens surface includes either a cylindrical lens surface or a toroidal lens surface, and
either a generatrix with respect to the cylindrical lens surface or a vertex of the toroidal lens surface is interposed between the projection axis and the light-receiving axis.

**16.** The optical sensor system of any one of claims 12 to 15, wherein
the projection axis and the light-receiving axis are arranged to be non-coaxial with each other.

**17.** The lens of any one of claims 12 to 16, wherein

a projected beam spot, formed, by the laser beam projected from the projector, on a plane intersecting at right angles with the projection axis, has a cross section in a shape of an ellipse with a major axis, and

the major axis is aligned with a direction perpendicular to each of the arrangement direction in which the non-lens surface region, the second lens surface, and the first lens surface are arranged one on top of another and a direction in which the projection axis extends.

FIG. 1

FIG. 2

*FIG. 3*

*FIG. 4 A*

*FIG. 4 B*

*FIG. 5*

*FIG. 6A*

CV1

1A

*FIG. 6B*

22 (20)

S1

220

1B

D1

FIG. 7

## FIG. 8 A

## FIG. 8 B

FIG. 9A

FIG. 9B

*FIG. 10 A*

*FIG. 10 B*

EP 4 660 671 A1

*FIG. 11*

*FIG. 12A*

*FIG. 12B*

33

*FIG. 13A*

*FIG. 13B*

*FIG. 14 A*

*FIG. 14 B*

*FIG. 15 A*

V1
B11    B12
B1    3
H1
22 (20)    221    1

A1

P1

21 (20)

Y
Z ⊙ → X

*FIG. 15 B*

With Curvature

41

22 (20)

221

S1

P2

C1

51

1C

Y
Z → X

*FIG. 15 C*

With No Curvature

41

22 (20)

220

D1

S1

C1

51

1B

Y
Z → X

## FIG. 16

Cross-Sectional Shape of Spot

K1, 6, X:Y=1:1

K2, 61, 6, 5:1

K3, 6, 62, 1:5

## FIG. 17

*FIG. 18 A*

*FIG. 18 B*

EP 4 660 671 A1

FIG. 19

FIG. 20 A

FIG. 20 B

FIG. 21

*FIG. 22*

## INTERNATIONAL SEARCH REPORT

International application No.

**PCT/JP2024/002607**

### A. CLASSIFICATION OF SUBJECT MATTER

*G02B 3/06*(2006.01)i; *G01C 3/06*(2006.01)i; *G01S 7/481*(2006.01)i; *G02B 3/08*(2006.01)i
FI:  G02B3/06; G02B3/08; G01C3/06 120Q; G01S7/481 A

According to International Patent Classification (IPC) or to both national classification and IPC

### B. FIELDS SEARCHED

Minimum documentation searched (classification system followed by classification symbols)

G02B3/06; G01C3/06; G01S7/481; G02B3/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-047141 A (DENSO WAVE INCORPORATED) 25 March 2021 (2021-03-25)<br>paragraphs [0034]-[0054], [0076], fig. 1-3 | 1-3, 5-14, 16 |
| P, X | JP 2023-134558 A (BRIEN HOLDEN VISION INSTITUTE LIMITED) 27 September 2023 (2023-09-27)<br>paragraphs [0092], [0140], fig. 14 | 1, 2, 6, 7, 9 |
| X | JP 09-230111 A (SHARP KABUSHIKI KAISHA) 05 September 1997 (1997-09-05)<br>paragraphs [0024], [0027], fig. 1 | 1, 2, 6, 7, 9 |
| X | JP 52-073746 A (SUWA SEIKOSHA KK) 21 June 1977 (1977-06-21)<br>p. 1, lower right column, line 14 to p. 2, upper right column, line 3, fig. 2 | 1, 2, 6, 9, 10 |
| X | CN 208535908 U (SHENZHEN FENIXLIGHT LIMITED) 22 February 2019 (2019-02-22)<br>paragraph [0034], fig. 1 | 1-6, 9-11 |

☑ Further documents are listed in the continuation of Box C.     ☑ See patent family annex.

*    Special categories of cited documents:
"A"  document defining the general state of the art which is not considered to be of particular relevance
"D"  document cited by the applicant in the international application
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| **27 February 2024** | **09 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 660 671 A1**

## INTERNATIONAL SEARCH REPORT

| International application No. |
|---|
| **PCT/JP2024/002607** |

### C. DOCUMENTS CONSIDERED TO BE RELEVANT

| Category* | Citation of document, with indication, where appropriate, of the relevant passages | Relevant to claim No. |
|---|---|---|
| X | US 2014/0362589 A1 (FOXCONN TECHNOLOGY CO., LTD.) 11 December 2014 (2014-12-11)<br>paragraphs [0016]-[0018], fig. 2, 3 | 1, 2, 6, 7, 9 |
| A | WO 2021/145190 A1 (SONY SEMICONDUCTOR SOLUTIONS CORP.) 22 July 2021 (2021-07-22)<br>entire text | 1-17 |
| A | JP 11-174388 A (HOYA HEALTH CARE KK) 02 July 1999 (1999-07-02)<br>entire text | 1-17 |
| A | JP 2000-153544 A (CANON KABUSHIKI KAISHA) 06 June 2000 (2000-06-06)<br>entire text | 1-17 |
| A | US 2015/0153589 A1 (CARL ZEISS VISION INTERNATIONAL GMBH) 04 June 2015 (2015-06-04)<br>all document | 1-17 |
| A | US 2011/0026262 A1 (FU ZHUN PRECISION INDUSTRY (SHEN ZHEN) CO., LTD.) 03 February 2011 (2011-02-03)<br>all document | 1-17 |

Form PCT/ISA/210 (second sheet) (July 2022)

45

**INTERNATIONAL SEARCH REPORT**
Information on patent family members

International application No.

**PCT/JP2024/002607**

| Patent document cited in search report | | | Publication date (day/month/year) | Patent family member(s) | | | Publication date (day/month/year) |
|---|---|---|---|---|---|---|---|
| JP | 2021-047141 | A | 25 March 2021 | (Family: none) | | | |
| JP | 2023-134558 | A | 27 September 2023 | US | 2020/0073147 | A1 | |
| | | | | paragraphs [0223], [0269], fig. 14 | | | |
| | | | | WO | 2018/076057 | A1 | |
| | | | | EP | 3532891 | A1 | |
| | | | | AU | 2017351635 | A | |
| | | | | SG | 11201903710Q | A | |
| | | | | KR | 10-2019-0076005 | A | |
| | | | | CN | 110226118 | A | |
| | | | | SG | 10202107685Y | A | |
| | | | | CN | 114637129 | A | |
| | | | | AU | 2022283726 | A | |
| JP | 09-230111 | A | 05 September 1997 | (Family: none) | | | |
| JP | 52-073746 | A | 21 June 1977 | (Family: none) | | | |
| CN | 208535908 | U | 22 February 2019 | (Family: none) | | | |
| US | 2014/0362589 | A1 | 11 December 2014 | CN | 104235756 | A | |
| WO | 2021/145190 | A1 | 22 July 2021 | US | 2023/0054053 | A1 | |
| | | | | EP | 4092463 | A1 | |
| | | | | KR | 10-2022-0123001 | A | |
| | | | | TW | 202138901 | A | |
| JP | 11-174388 | A | 02 July 1999 | (Family: none) | | | |
| JP | 2000-153544 | A | 06 June 2000 | US | 6252721 | B1 | |
| US | 2015/0153589 | A1 | 04 June 2015 | EP | 2878989 | A1 | |
| | | | | CN | 104730727 | A | |
| | | | | MX | 2014014478 | A | |
| | | | | BR | 102014029894 | A | |
| | | | | IN | 3376DE2014 | A | |
| | | | | ES | 2837798 | T | |
| US | 2011/0026262 | A1 | 03 February 2011 | CN | 101988679 | A | |

Form PCT/ISA/210 (patent family annex) (July 2022)

**REFERENCES CITED IN THE DESCRIPTION**

**Patent documents cited in the description**

- JP 2021047141 A